# EUROPÄISCHE PATENTSCHRIFT

(11) **EP 3 661 797 B1**
(45) Veröffentlichungstag und Bekanntmachung des Hinweises auf die Patenterteilung: **18.01.2023**
(21) Anmeldenummer: 18730684.0
(22) Anmeldetag: 04.06.2018
(51) Int. Cl.: B60K 37/06, G06F 3/16

(54) **VERFAHREN, VORRICHTUNG, MOBILES ANWENDERGERÄT, COMPUTERPROGRAMM ZUR STEUERUNG EINES AUDIOSYSTEMS EINES FAHRZEUGS**
METHOD, DEVICE, MOBILE USER APPARATUS AND COMPUTER PROGRAM FOR CONTROLLING AN AUDIO SYSTEM OF A VEHICLE
PROCÉDÉ, DISPOSITIF, APPAREIL UTILISATEUR MOBILE, PROGRAMME INFORMATIQUE POUR LA COMMANDE D'UN SYSTÈME AUDIO D'UN VÉHICULE

(30) Priorität: 01.08.2017 DE 102017213241
(43) Veröffentlichungstag der Anmeldung: 10.06.2020
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2018/064623
(87) Internationale Veröffentlichungsnummer: WO 2019/025054

(56) Entgegenhaltungen:
- EP-A1- 1 850 640
- WO-A1-2014/030809
- DE-A1-102013 224 131
- DE-A1-102015 014 916
- DE-A1-102016 118 917
- JP-A- H07 176 178
- US-A1- 2002 150 254
- US-A1- 2015 110 287

## Beschreibung

Die Erfindung betrifft ein Verfahren, eine Vorrichtung, ein mobiles Anwendergerät und ein korrespondierendes Computerprogramm zur Steuerung eines Audiosystems eines Fahrzeugs.

Moderne Fahrzeuge können auf eine Vielzahl unterschiedlicher Audioquellen zugreifen, die über ein Audiosystem des Fahrzeugs im Innenraum des Fahrzeugs abgespielt werden können. Die Audioquellen umfassen dabei z.B. einen Radioempfänger, Musik oder Hörbücher von einem in dem Fahrzeug fest eingebauten Speicher (z.B. einer Festplatte) oder von einem in dem Fahrzeug mitgeführten Endgerät. Dazu zählt auch Zugriff bzw. Wiedergabe von Streaming-Inhalten, z.B. eines Unterhaltungsprogramms aus dem Internet.

Ebenso kann beispielsweise ein Sound zu einem Video, eine Fernsehsendung, einem Videospiel, eine Videosimulation, z.B. über ein sog. Rear-Seat-Entertainment-System, ausgegeben werden. Ferner sind Audiosysteme für Fahrzeuge bekannt, die mit einer zunehmenden Fahrzeuggeschwindigkeit während der Fahrt die Lautstärke eines Multimediaprogramms anpassen.

Über ein Audiosystem des Fahrzeugs wird auch zunehmend ein künstlich erzeugtes Motorgeräusch ausgegeben. Ein solches Motorgeräusch kann Bestandteil eines bestimmten Sound-Designs sein. Bei elektromotorisch betriebenen Fahrzeugen dient das künstlich erzeugte Motorgeräusch z.B. dazu, das vertraute Gefühl von Verbrennungsmotoren für den Fahrer zu erzeugen.

Darüber hinaus, besteht typischerweise ein Bedürfnis oder Notwenigkeit der Insassen des Fahrzeugs untereinander zu kommunizieren. Eine solche, insbesondere sprachliche Kommunikation kann für den Nutzer des Fahrzeugs oftmals eine sehr hohe Relevanz haben. Die Möglichkeit der Insassen untereinander möglichst ungestört zu kommunizieren kann für die Nutzer des Fahrzeugs zeitweise viel wichtiger sein, als die technischen Parameter des Fahrzeugs, wie Motorleistung, Fertigungsqualität, das Fahrzeugdesign oder die Fahrzeugmarke. Eine Kommunikation der Insassen wird dennoch sehr häufig durch eine Vielzahl der im Fahrzeug ausgegebenen Audiosignalen gestört. Daher besteht ein Widerspruch zwischen dem Wunsch der Insassen bestimmte Audiosignale zu hören und bei der Fahrt ungestört zu sprechen. Auch können die Insassen des Fahrzeugs, z.B. Mitglieder einer Familie sehr unterschiedliche, teils widersprüchliche Bedürfnisse, z.B. hinsichtlich der aktiven sprachlichen Kommunikation oder hinsichtlich dem Zuhören zu anderen Insassen oder dem Zuhören zu bestimmten Audiosignalen haben.

Das Dokument WO2014030809A1 offenbart eine Spracherkennungsvorrichtung, die eine erste Benutzereingabeeinheit zum Empfangen eines ersten Benutzerbefehls einschließt, sowie eine zweite Benutzereingabeeinheit zum Empfangen eines zweiten Benutzerbefehls und eine Steuereinheit zum Ausführen einer spezifischen Funktion gemäß einer Kombination der ersten und zweiten Benutzerbefehle, die über die ersten und zweiten Benutzereingabeeinheiten eingegeben werden.

Das Dokument US20150110287A1 offenbart ein Verfahren zur Verarbeitung einer Vielzahl von Audioströmen in einem Computersystem an Bord eines Fahrzeugs. Das Verfahren empfängt die Vielzahl von Audioströmen von einer Vielzahl von Stellen innerhalb eines Fahrzeugs, priorisiert jeden der Vielzahl von Audioströmen, um ein Priorisierungsergebnis zu erhalten und schließt eine Aufgabe, die mit jedem der Vielzahl von Audioströmen verbunden ist, gemäß dem Priorisierungsergebnis ab.

Das Dokument DE102013224131A1 offenbart ein Fahrzeug mit einer Vorrichtung zur Beschallung eines Innenraums des Fahrzeugs. Die Vorrichtung umfasst eine Sensoreinrichtung. Die Sensoreinrichtung ist dazu ausgebildet, eine Geste eines Benutzers zu erfassen und ein die Geste charakterisierendes Signal bereitzustellen. Die Vorrichtung umfasst außerdem eine zumindest einen Lautsprecher umfassende Lautsprecheranordnung. Der Lautsprecher ist dazu ausgebildet, abhängig von dem Signal eine Charakteristik eines von der Lautsprecheranordnung emittierten Audiosignals zu verändern.

Das Dokument US20020150254A1 offenbart eine Audio-Benutzeroberfläche, in der Gegenstände in einem Audiofeld durch entsprechende synthetisierte Klangquellen dargestellt werden, von denen Geräusche, die mit den Gegenständen in Zusammenhang stehen, auszugehen erscheinen. Die Schnittstelle wird von einer Vorrichtung erzeugt, die eine Funktion zur Bestimmung einer Wiedergabeposition für jede Klangquelle enthält, an der die Klangquelle zum Klang im Audiofeld synthetisiert werden soll. Um die Unterscheidung zwischen den synthetisierten Klangquellen zu erleichtern, werden die Wiedergabepositionen der Klangquellen so eingestellt, dass das Audiofeld in einem Bereich des Audiofeldes um eine Fokusreferenz erweitert wird. Diese Fokusreferenz ist z.B. die aktuelle Blickrichtung des Benutzers oder die Position eines Audio-Cursors im Audiofeld.

Das Dokument DE102015014916A1 offenbart ein Verfahren zur Ausgabe von Audiosignalen zumindest eines in einem Fahrzeug angeordneten Audiowiedergabegerätes. Das Verfahren verzögert die Ausgabe der Audiosignale bei erfassten, verbalen akustischen Signalen, insbesondere von Insassen des Fahrzeuges, automatisch um einen Zeitraum eines Vorhandenseins der verbalen akustischen Signale oder gibt die Audiosignale automatisch sitzplatzorientiert aus.

Das Dokument EP1850640A1 offenbart ein Fahrzeugkommunikationssystem und ein Verfahren zur Steuerung einer Sprachausgabe des Fahrzeugkommunikationssystems. Das Fahrzeugkommunikationssystem umfasst eine Vielzahl von Mikrofonen, die geeignet sind, Sprachsignale verschiedener Fahrzeuginsassen zu erfassen. Ein Mischer kombiniert die Audiosignalkomponenten der verschiedenen Mikrofone zu einem resultierenden Sprachausgangssignal. Eine Gewichtungseinheit bestimmt die Gewichtung der Audiosignalkomponenten für das resultierende Sprachausgangssignal.

Insbesondere, offenbaren die Dokumente DE102015014916 A1 und EP1850640 A1 ein Verfahren zur Steuerung eines Audiosystems eines Fahrzeugs mit folgenden Schritt: Erfassen einer Stimme zumindest eines Insassen des Fahrzeugs, wobei die Stimme repräsentativ ist für eine sprachliche Botschaft an einen anderen Insassen des Fahrzeugs.

Das Dokument JPH07176178A offenbart ein Audiogerät für Fahrzeuge, das eine reibungslose Unterhaltung während des Zuhörens eines Audiosignals ermöglicht. Das Audiogerät umfasst zumindest ein Mikrofon, das die Stimme eines Insassen sitzplatzorientiert aufnimmt und das Audiosignal der Stimme an den Lautsprechern der anderen Sitzplätze ausgibt.

Das Dokument DE102016118917A1 offenbart im Allgemeinen Fahrzeuge, und im Besonderen Verfahren und Systeme zur Audioübertragung innerhalb von Fahrzeugen. Das Verfahren umfasst das Empfangen einer Anforderung zur Schallübertragung von einem ersten Insassen innerhalb eines Fahrzeugs zu einem zweiten Insassen innerhalb des Fahrzeugs, die Identifizierung der Position des ersten Insassen und des zweiten Insassen, und das Durchführen der Schallübertragung mit einer Einstellung für eine Phasendifferenz, die zumindest teilweise auf den entsprechenden Positionen des ersten Insassen und des zweiten Insassen basiert.

Die Aufgabe, die der Erfindung zugrunde liegt, ist ein Verfahren, eine Vorrichtung, ein mobiles Anwendergerät und ein korrespondierendes Computerprogramm zu einer verbesserten Steuerung eines Audiosystems des Fahrzeugs aufzuzeigen. Insbesondere wird dabei zumindest ein auszugebendes Audiosignals derart angepasst, dass sich funktionale Verbesserung bzw. eine funktionale Mehrung ergibt.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich gemäß eines ersten Aspekts durch ein Verfahren zur Steuerung eines Audiosystems eines Fahrzeugs. Das Verfahren umfasst ein Erfassen einer Stimme zumindest eines Insassen des Fahrzeugs, wobei die Stimme repräsentativ ist für eine sprachliche Botschaft an einen anderen Insassen des Fahrzeugs, wobei erkannt wird, ob es sich bei einer erfassten Stimme um eine Stimme einer bestimmten Person oder einer bestimmten Personengruppe handelt. Das Verfahren umfasst weiterhin ein Verändern zumindest eines Audiosignals des Fahrzeugs abhängig vom Erkennen der Stimme einer bestimmten Person oder einer bestimmten Personengruppe.

In einem vereinfachten Beispiel wird in dem Verfahren, wenn erkannt wird, dass beispielsweise der Beifahrer anfängt zu sprechen oder vorhat zu sprechen, das auszugebende, insbesondere das gerade ausgegebene, Audiosignal passend verändert. Bevorzugt erfolgt die Veränderung nur bzw. vorwiegend betreffend das passende Zeitintervall.

Somit wird mittels des Verfahrens das Audiosignal derart verändert, dass das (veränderte) Audiosignal und/oder der Insasse, zumindest die sprachliche Botschaft des Insassen besser gehört bzw. verstanden werden kann.

Das Verfahren kann zur Erreichung bestimmter Ziele eingerichtet sein. Solche Ziele bzw. die daraus resultierende Vorteile können insbesondere sein:
- Ein Sprecher (Fahrer, Beifahrer, Person auf dem Rücksitz), muss ein laufendes Audioprogramm nicht übertönen um hinreichend gehört bzw. verstanden zu werden.
- Ein Zuhörer muss sich weniger anstrengen.
- Der Sprecher und der Zuhörer müssen nicht auf das Audioprogramm verzichten um eine Konversation zu führen. Das Audioprogramm kann weiter gehört werden.
- Auch dringende Mitteilungen können selbst bei sehr lauter Musik zuverlässig kommuniziert werden.

Das auszugebende Audiosignal kann beispielsweise bereits als ein Stereosignal, bevorzugt ein mehrkanaliges Signal, oder als ein, z.B. kodiertes, Raumklangsignal von einer Audioquelle, z.B. als ein Datenstrom bzw. entsprechende Datenpakete vorliegen. Das auszugebende Audiosignal kann z.B. in einem der aus Heimkino-Anwendungen bekannten Raumklangformate vorliegen. Bevorzugt kann ein dem Audiosignal entsprechendes Raumklangsignal, z.B. aus den Daten oder Datenpaketen einer Audioquelle, entsprechend den nachstehend beschriebenen Merkmalen der Erfindung ermittelt, verstärkt und im Innenraum des Fahrzeugs, ausgegeben werden.

In einem vereinfachten Beispiel kann das Verändern des Audiosignals ein Verändern einer Lautstärke oder einer Lautstärke eines der mehrerer bestimmter Lautsprecher des Audiosystems des Fahrzeugs sein. Weitere Varianten werden in der weiteren Beschreibung aufgezeigt.

Das Verändern, insbesondere Anpassen des auszugebenden Audiosignals kann bereits während seiner Erzeugung, z.B. beim Ermitteln der das Audiosignal repräsentierender Datenabschnitte bzw. des Datenstroms erfolgen. Das Verändern, insbesondere Anpassen des im Innenraum des Fahrzeugs auszugebenden Audiosignals kann mittels einer unmittelbaren oder mittelbaren Ansteuerung des Audiosystems des Fahrzeugs bzw. einer im Fahrzeug mitgeführten Recheneinheit, die das Audiosignal erzeugt, verarbeitet oder ausgibt, erfolgen.

Das Kommunikationsvorhaben und/oder die Stimme zumindest eines, insbesondere eines bestimmten Insassen des Fahrzeugs können beispielsweise mit Mitteln des Fahrzeugs, z.B. mit Mikrophonen einer Freisprecheinrichtung und/oder mit weiterer Sensorik im Innenraum des Fahrzeugs, beispielsweise einer Innenraumkamera, erfasst werden. Besonders bevorzugt kann ein Kommunikationsvorhaben mit einer Innenraumkamera des Fahrzeugs und der entsprechend eingerichteten Bildverarbeitung erfolgen.

In einem Beispiel repräsentiert das Kommunikationsvorhaben, dass eine sprachliche Kommunikation, insbesondere von einem bestimmten Insassen oder von einem Insassen an einem bestimmten Sitzplatz, insbesondere mit einem gewissen (einen Schwellwert übersteigendem) Wahrscheinlichkeitsmaß zu erwarten ist. Auch kann mit dem Kommunikationsvorhaben einen prädizierten Wert eines, z.B. akustischen Parameter der erwarteten sprachlichen Kommunikation erfasst und berücksichtigt werden. Auch kann der Parameter "Kommunikationsvorhaben" auf die analoge Weise einen Abschluss bzw. die Beendigung eines Abschnitts der sprachlichen Kommunikation, z.B. ein Ende eines Satzes, Phrase, oder einer bestimmten linguistischen Struktur kennzeichnen.

Insbesondere kann hierbei ein Parameter kennzeichnend den Anfang und/oder Ende der Sprachmitteilung, Verlauf der Laustärke, Tonlage, etc., ermittelt werden.

Das Audiosignal des Fahrzeugs kann in dieser Erfindung folgendes sein:
- Ein, insbesondere über ein Multimediasystem des Fahrzeugs abgespielter Multimediainhalt, z.B. Musik, Video, Radiosendung, Videospiel, Simulation, etc.
- Ein Teil eines Sound-Designs des Fahrzeugs und/oder eines künstlich erzeugten Motorgeräuschs bzw. Fahrgeräuschs, wie dieses, beispielsweise bei Elektrofahrzeugen vorgesehen sein kann.
- Eine Ansage eines Bordcomputers des Fahrzeugs oder eines mitgeführten, mit dem Fahrzeug verbundenen Anwendergeräts.
- Ferner kann das Audiosignal des Fahrzeugs auch ein Audiosignal eines mit dem Fahrzeug verbundenen, insbesondere Mittel des Fahrzeugs nutzenden, mobilen Anwendergeräts (Smartphone, Tablet, Smart-Watch, Smart-Glasses,) sein.
- Das Audiosignal des Fahrzeugs kann auch ein Warnsignal und/oder Sprachsignal eines mit dem Fahrzeug verbundenen mobilen Anwendergeräts (Smartphone, Tablet, Smart-Watch, Smart-Glasses,) sein, welches sich insbesondere mit dem aktuellen Fahrkontext, in dem sich das Fahrzeug befindet im Zusammenhang steht.

Insbesondere kann ein Audiosignal ein künstlich erzeugtes, z.B. synthetisiertes Motorgeräusch bzw. ein künstlich erzeugtes Fahrgeräusch sein. Ein solcher Motorgeräusch bzw. ein künstlich erzeugtes Fahrgeräusch können zusätzlich oder abhängig von dem eigentlichen, physikalischen Motorgeräusch für den Innenraum des Fahrzeugs erzeugt und (ebenfalls) mit dem Audiosystem des Fahrzeugs ausgegeben werden. Dieser kann im Audiosystem des Fahrzeugs mit einem oder mehreren weiteren Audiosignalen kombiniert, insbesondere gemischt, insbesondere als eine oder mehrere virtuelle (für einen Insassen in einer bestimmten Position, Entfernung, Richtung wahrnehmbare) Klangquellen platziert werden.

Ein künstlich erzeugtes Motorgeräusch bzw. Fahrgeräusch kann im Verfahren abhängig von einer real erzeugten bzw. abgegebenen Leistung des Antriebs des Fahrzeugs und/oder abhängig von einer durch den Fahrer vom Fahrzeugantrieb abgerufener Leistung (beispielsweise noch bevor die entsprechende Leistung tatsächlich vorliegt) erfolgen. Dabei kann im Verfahren für die Insassen, insbesondere für den Fahrer ein von ihm gewünschtes Fahrgefühl mit einer subjektiv verbesserten Fahrdynamik vermittelt werden. Ein entsprechendes auszugebendes Audiosignal kann erfindungsgemäß derart erzeugt bzw. gesteuert werden, dass ein Übermitteln eine sprachliche Kommunikation nicht oder lediglich geringfügig beeinträchtigt wird. Dadurch ergibt sich eine wesentliche gestalterische Freiheit zur Umsetzung eines solchen Motorgeräusche bzw. Fahrgeräuschs.

Hierbei kann das mobile Anwendergerät über eine hierfür eingerichtete Schnittstelle des Fahrzeugs eine Information zu dem Kommunikationsvorhaben und/oder der Stimme zumindest eines, insbesondere eines bestimmten Insassen des Fahrzeugs und/oder eines Insassen an einem bestimmten Sitzplatz des Fahrzeugs (z.B. von den Mikrofonen des Fahrzeugs) bekommen und entsprechend eine Anpassung des seinerseits veranlassten Audiosignals des Fahrzeugs vornehmen.

In dem Verfahren wird auch erkannt, dass es sich bei der erfassten Stimme um eine Personenstimme, insbesondere um eine Stimme einer bestimmten Person oder bestimmten Personengruppe, handelt und das Verändern des Audiosignals des Fahrzeugs erfolgt abhängig von der Erkennung der Stimme als eine Personenstimme, insbesondere abhängig vom Erkennen der Stimme einer bestimmten Person oder Personengruppe.

Mit anderen Worten wird hierbei speziell auf Personenstimmen, insbesondere nicht auf weitere Geräuschquellen, wie z.B. das Bellen eines Hundes oder Hupen anderer Verkehrsteilnehmer oder auf einen Hintergrundgeräusch, z.B. Windgeräusche oder spezifischen Geräuschkulissen reagiert. Beziehungsweise wird auf andere Soundquellen erfindungsgemäß prinzipiell anders und/oder mit einem anderen Verändern des Audiosignals, z.B. auch mittels Anpassung von Parametern des Audiosignals reagiert.

Beispielsweise erfolgt eine Anpassung einer, insbesondere Sprache bzw. Personenstimmen umfassenden, auszugebenden Audiosignals vorwiegend oder stärker auf den oder die Parameter der auditiven Kommunikation als, z.B. auf akustische Parameter einer weiterer Geräuschquelle, wie z.B. das Bellen eines Hundes oder Hupen anderer Verkehrsteilnehmer oder auf einen Hintergrundgeräusch, z.B. Windgeräusche oder spezifischen Geräuschkulissen.

Beispielsweise wird ein Parameter des Audiosignals, auf die Erkennung dass das Audiosignal Sprache umfasst, anders, insbesondere stärker angepasst, im Vergleich zu einem Audiosignal, welches keine Sprache umfasst oder vorwiegend Musikinhalte umfasst.

Dies ist besonders vorteilhaft, weil eine sprachliche Meldung, hinsichtlich ihrer Verständlichkeit wesentlich stärker durch andere Personenstimmen als durch weitere Geräusche gestört wird.

Bei der Stimme einer bestimmten Person und/oder der Stimme zugehörig zu einer bestimmten Personengruppe kann es sich um eine eingelernte Stimme handeln. Bei der eingelernten Stimme ist eine, insbesondere eine durch bestimmte, eingelernte Parameter oder Parameterkombinationen gekennzeichnete Stimme handeln. Bevorzugt können im Verfahren auch Stimmen bestimmter Personen eingelernt werden, und speziell auf die Erkennung der Stimmen der Personen eine passende Anpassung des Audiosignals ausgeführt werden.

Das Einlernen der Stimme (einer bestimmten Person) oder der Personengruppe kann wiederum im Fahrzeug oder auch außerhalb des Fahrzeugs oder mit Mitteln eines weiteren Geräts, z.B. eines mobilen Anwendergeräts erfolgen.

Eingelernte Stimmen können als ein oder mehrere, für die Stimme typische Parameterwerte, z.B. als ensprechende Datensätze repräsentiert und berücksichtigt werden. Auf Basis solcher Parameter können Erkennungsdaten für eine oder mehrere bestimmte Stimmen ermittelt bzw. im Verfahren verarbeitet werden. Beispielsweise können die Erkennungsdaten für eine oder mehrere Stimmen auf Basis einer Sprachsteuerung, Freisprechvorrichtung des Fahrzeugs oder eines mobilen Anwendergeräts (z.B. beim Telefonieren) gewonnen werden.

Besonders bevorzugt kann für zumindest zwei Stimmen von zwei unterschiedlichen Personen eine unterschiedliche Anpassung (Kennlinie, mathematischer Zusammenhang) zumindest eines Abschnitts des Audiosignals ausgeführt werden.

In einem weiterführenden Beispiel kann, die zumindest ein Parameter des Audiosignals, auf bestimmte durch eine Erkennung oder Voreinstellung hervorgehobene Personen, bzw. Insassen auf bestimmten Sitzen, anders, insbesondere wesentlich stärker angepasst werden.

Beispielsweise wenn eine zur Führung berechtigte Person, z.B. eine Führungsperson oder ein Einsatzleiter bei einer Fahrt mit bzw. an seinen Mitarbeitern bzw. Mannschaft spricht, kann mit dem Verfahren um eine hinreichende Stille, bzw. Hörbarkeit der sprachlichen Botschaft gesorgt Die "Personengruppen" umfassen hierbei z.B. Familienmitglieder, bekannte, insbesondere im Fahrzeug eingelernte Stimmen, "Frauen", "Männer", "Kinder".

Insbesondere ist dabei eine im Innenraum des Fahrzeugs (live) gesprochene die Stimme einer Person (keine dort wiedergegebene Stimme, z.B. aus einer Radiosendung) gemeint. Gemäß einer weiteren optionalen Ausgestaltung wird die Stimme eines Sprechers im Innenraum des Fahrzeugs von einer Stimme aus einem Multimediaabspielgerät, insbesondere aus dem Soundsystem des Fahrzeugs oder einem an das Fahrzeug angeschlossenen mitgeführten Multimediaabspielgerät, unterschieden.

Bevorzugt kann die Stimme eines Sprechers im Innenraum des Fahrzeugs von der Stimme aus einem Multimediasystem durch einen Abgleich der Signale eines Mikrofonsystems des Fahrzeugs und eines Signals des Multimediasystems des Fahrzeugs unterschieden werden.

Beispielsweise kann die Stimme eines Sprechers im Innenraum des Fahrzeugs von einer Stimme aus einem Multimediaabspielgerät, insbesondere aus dem Soundsystem des Fahrzeugs oder einem an das Fahrzeug angeschlossenen mitgeführten Multimediaabspielgerät, dadurch unterschieden werden, dass ermittelt wird, ob die Stimme eines Sprechers im Fahrzeug nur im Mikrofonsystem des Fahrzeugs enthalten ist bzw. erkennbar ist, oder ob die Stimme (auch) in einem ausgewerteten Signal eines Multimediasystems erkannt werden kann. Ein solcher Abgleich kann z.B. mittels Auswertung eines Ähnlichkeitsmaßes bzw. Korrelationsmaßes zwischen einem mit einem Mikrofon erfassten Signals und eines, z.B. aus dem Multimediasystem, eingelesenen Audiosignals erfolgen.

Gemäß einer weiteren optionalen Ausgestaltung erfolgt das Erfassen des Kommunikationsvorhabens zumindest eines Insassen des Fahrzeugs mittels des Erkennens seiner Lippenbewegung und/oder einer körperlichen Regung, insbesondere mittels einer Innenraumkamera.

Bevorzugt kann ein Parameter des Audiosignals auch vorab (vor oder kurz nach dem Anfang des Sprechens) angepasst werden. Dabei ergibt sich der Vorteil, dass der Person mit einem Mitteilungswunsch oder Mitteilungsabsicht, bzw. die dabei ist etwas sprachlich zu kommunizieren, sehr zuvorgekommen wird.

Dies kann beispielsweise mittels einer Innenraumkamera des Fahrzeugs realisiert werden, die zumindest den Fahrer des Fahrzeugs (und ggf. den Beifahrer) erfasst und entsprechende körperliche Regungen erkennen kann.

Als Kommunikationsvorhaben können auch eine oder mehrere körperlichen Regungen (aus der Analyse der Körpersprache und/oder Emotionsauswertung) erkannt werden, die einem Sprechen vorangehen. Dies kann basierend auf entsprechenden aus der Wissenschaft basierenden Gesetzmäßigkeiten oder Beobachtungen, und/oder basierend auf Nutzereinstellungen und/oder bevorzugt basierend auf einem maschinellen Lernverfahren erfolgen.

Insbesondere bezieht sich das Einlernen Stimmen und/oder körperliche Regungen im Verfahren auf bestimmte, für bestimmte Insassen, insbesondere Insassen zugehörig zu bestimmten Personengruppen, charakteristische Merkmale, z.B. entsprechende qualitative und/oder quantitative Werte oder Zusammenhänge zwischen solchen.

Bevorzugt bezieht sich ein Einlernen auf das Ermitteln eines (naturwissenschaftlichen, mathematischen) Zusammenhangs zwischen einem Parameter einer oder mehreren körperlichen Regungen, die abhängig von bestimmten Mustern der Gestik und/oder Mimik sind, und einer einhergehenden oder nachfolgenden auditiven Kommunikation, insbesondere dem Sprechen einer Person (Insassen). Dies kann im Verfahren in Bezug auf eine bestimmte Person oder in Bezug auf eine Person mit bestimmten, z.B. sensorisch erkennbaren Eigenschaften (Körpergröße, Kleidung, Bewegungsparameter, Personengruppe, etc.) oder in Bezug auf eine Person an einer bestimmten Raumposition und/oder an einem Sitzplatz des Fahrzeugs eingelernt werden.

Erfindungsgemäß kann das besagte Einlernen ferner umfassen: Erfassen eines Feedback-Indikators, der kennzeichnend ist für eine zumindest einmal, zweckmäßige, passende bzw. zufriedenstellende Anpassung des Audiosignals, und daraufhin eine Berücksichtigung des Feedback-Indikators bei einer wiederholten Ausführung des Verfahrens.

Besonders bevorzugt ist hierbei vorgesehen, dass als eine Bedingung zur Anpassung des Audiosignals ein Lächeln und Sprechen und/oder ein durch eine starke mimische Geste erkennbar erschrecktes Gesicht und lautes Sprechen bzw. Schreien erkannt wird und daraufhin eine, insbesondere verstärkte, Anpassung eines Parameters des Audiosignals erfolgt.

Besonders bevorzugt kann daraufhin das Audiosignal des Fahrzeugs beim Erkennen eines erschreckten Gesichts (mimischer Ausdruck) und/oder beim Erkennen eines Streits oder Schreiens ausgeschaltet, angehalten, unterbrochen oder stärker angepasst werden, als bei einer durchschnittlich ausgeprägten Kommunikationsbereitschaft und/oder Stimmerkennung.

Gemäß einer weiteren optionalen Ausgestaltung wird das Audiosignal abhängig von der Position des Sprechers und/oder einer relativen Richtung, aus der der gesprochene Inhalt kommt oder entsprechend dem Kommunikationsvorhaben kommen wird, angepasst.

Beispielsweise kann auf das Sprechen oder die Kommunikationsbereitschaft des Fahrers und/oder das Sprechen eines Insassen am Beifahrersitz das (laufende oder geplante) Audiosignal des Fahrzeugs anders, insbesondere stärker angepasst werden, als auf das Sprechen und/oder Kommunikationsbereitschaft eines Insassen von der Rückbank.

Beispielsweise können somit Insassen von der Rückbank eine Verkehrsmitteilung nicht oder nur in bestimmten Fällen verändern, während der Insasse am Beifahrersitz einen stärkeren Einfluss hat.

Die Position des Sprechers kann erfindungsgemäß ermittelt werden, durch einen Abgleich zwischen den Signalen eines Mikrofonsystems im Fahrzeug (z.B. mind. zwei Mikrofone einer Freisprecheinrichtung) und/oder Sitzbelegungserkennung und/oder Innenraumkamera.

Beispielsweise kann die Position des Sprechers aus einer Phasenverschiebung eines akustischen Signals ermittelt werden, das z.B. von zwei räumlich versetzten Mikrofonen im Fahrzeug erfasst wird.

Gemäß einer weiteren optionalen Ausgestaltung wird eine Emotionserkennung und/oder Absichtserkennung eines Insassen des Fahrzeugs erkannt und im Verfahren berücksichtigt, wobei daraufhin die Veränderung des Audiosignals, bevorzugt in unterschiedlicher Weise, erfolgt.

Hierbei kann die Emotionserkennung und/oder Absichtserkennung insbesondere mit Mitteln des Fahrzeugs, z.B. mit einer Innenraumkamera des Fahrzeugs erkannt werden. Beispielsweise kann die Emotionserkennung und/oder Absichtserkennung durch eine Auswertung des zeitlichen Verlaufs der Mimik des Insassen, seiner Gestik mit oder ohne weitere körperliche Regungen umfassen.

Beispielsweise kann bei einer erkannten sehr hoher Aufregung des Insassen (Sprechers) eine frühere und/oder stärkere Anpassung des Audiosignals des Fahrzeugs erfolgen.

Ferner kann im Verfahren alternativ oder zusätzlich ein Umschalten von einem ersten Audiosignal zu einem zweiten Audiosignal, und ggf. umgekehrt, abhängig von dem erfassten Parameter der auditiven Kommunikation erfolgen. Dabei kann zumindest ein Abschnitt des Audiosignals durch einen anderen Abschnitt des Audiosignals ersetzt werden. Dies kann im Verfahren durch einen Zugriff auf die entsprechende Signalquelle bzw. Datenabschnitte variiert werden.

Ferner kann auf das Ermitteln, insbesondere Prädizieren eines Parameters der auditiven Kommunikation ein derartiges Verändern der Raumklangparameter des Audiosystems erfolgen, dass, veränderte, insbesondere für den Parameter der auditiven Kommunikation angepasste, akustische Raum-Eigenschaften, insbesondere eine virtuelle Akustik, für die Ausgabe eines Abschnitts des Audiosignals simuliert werden. Beispielsweise kann es dabei um eine, insbesondere fließende Umschaltung bzw. Umwandlung zwischen zumindest zwei Parameter-Datensätzen repräsentierend unterschiedliche räumliche Eigenschaften, z.B. ein (bestimmtes) "Konzertsaal", "Jazz-Club", "Science-Fiction", "Kino", "Gaming", etc. "Nachrichten", erfolgen.

Dabei kann abhängig von dem erfassten Parameter der auditiven Kommunikation (im Ergebnis) ein schnelles Umschalten oder ein schrittweiser Übergang zwischen einer optimierten Musikwahrnehmung und einer optimierten Hörbarkeit der auditiven Kommunikation oder zu einer insgesamt optimierten Wahrnehmbarkeit ausgeführt werden.

Ferner kann im Verfahren optional vorgesehen sein, dass eine Wiederholung eines Abschnitts eines Audiosignals erfolgt, welcher durch die ermittelte auditive Kommunikation wesentlich beeinflusst ist bzw. wurde. Dabei kann z.B. ein bereits angefangener Musiktitel, der während des Abspielens durch die auditive Kommunikation wesentlich (stark oder während eines relativ langen Zeitintervalls) übertönt worden ist, wiederholt ausgegeben werden.

Dabei kann beispielsweise ein Teil eines Sprache umfassenden Programms, der während des Abspielens durch die auditive Kommunikation wesentlich (stark oder während eines erheblichen Zeitintervalls) übertönt worden ist, wiederholt ausgegeben werden. Dabei kann die Wiederholung derart erfolgen, dass der wiederholte Abschnitt des Audiosignals einen gültigen und hinreichend vollständigen, insbesondere eines an sich sinnvoll wahrnehmbaren Musikabschnitts, z.B. eine Gesangsstrophe und/oder ein an sich verständlichen Informationsabschnitt und/oder einer sprachlichen Struktur (Phrase, Satz, Nebensatz, etc.) repräsentiert.

Als eine Wiederholung ist dabei auch zu verstehen, dass ein neuer Abschnitt des Audiosignals bzw. ein Abschnitt des Audiosignals erneut erzeugt wird, zumindest ein nicht hinreichend übermittelter Inhalt, z.B. damit ausgeglichen, ergänzt oder ersetzt wird.

Auch kann ein Ermitteln eines Maßes für die Anwendbarkeit und/oder Erfolgswahrscheinlichkeit in Bezug auf die Ausgabe zumindest eines Abschnitts des auszugebenden Audiosignals, unter Berücksichtigung des ermittelten Parameter der auditiven Kommunikation und/oder zumindest eines weiteren, im Innenraum des Fahrzeugs hörbaren akustischen Inhalts, z.B. eines Fahrgeräusches bzw. Motorgeräusches, z.B. auch in Bezug auf vorausdefinierte Optimierungskriterien, nicht hinreichend ist oder war, und daraufhin: Auswahl einer Maßnahme in Bezug auf das auszugebende Audiosignal.

Beispielsweise kann ein Maß für eine zweckmäßige Anwendbarkeit der Anpassung des Audiosignals und/oder ein Maß der Erfolgswahrscheinlichkeit zumindest teilweise vorab, d.h. vor oder teilweise während der Ausgabe des Audiosignals erfolgen. Auch kann ein Maß für die Erfolgswahrscheinlichkeit in Bezug auf einen bereits in der Ausgabe befindlichen oder bereits ausgegebenen Abschnitt des Audiosignals ermittelt werden. Beispielsweise kann ein Maß für die Anwendbarkeit oder Erfolgswahrscheinlichkeit eine, insbesondere voraussichtliche, Erreichung eines Optimierungskriteriums, z.B. bezüglich einer Wahrnehmbarkeit des betreffenden Abschnitts der auditiven und/oder des Audiosignals, z.B. von einem oder mehreren bestimmten Sitzen des Fahrzeugs aus, repräsentieren.

Abhängig von dem ermittelten Maßes für die Anwendbarkeit und/oder Erfolgswahrscheinlichkeit können diverse in diesem Dokument beschriebene Parameter des Audiosignals, z.B. die Logik zur Anpassung des Audiosignals angepasst werden. Beispielsweise kann eine solche Maßnahme kann z.B. das Variieren des Zeitpunkts der Ausgabe zumindest eines Abschnitts des Audiosignals und/oder einer wiederholten Ausgabe eines Abschnitts des Audiosignals umfassen.

Alternativ oder zusätzlich kann zumindest ein Zeitparameter zur Ausgabe zumindest eines Abschnitts des Audiosignals ermittelt werden, der einen (absoluten oder relativen) Zeitpunkt, insbesondere zu einem Anfang und/oder Ende oder der Dauer eines Zeitintervalls kennzeichnet, der zur Ausgabe des Audiosignals, insbesondere eines bestimmten Abschnitt des Audiosignals oder eines Audiosignals mit einem bestimmten Inhalt, beispielsweise unter Berücksichtigung zumindest eines Optimierungskriteriums, (explizit) nicht geeignet ist. Daraufhin kann die Ausgabe zumindest eines Abschnitts eines Audiosignals unter Berücksichtigung eines solchen Zeitparameters erfolgen.

Bevorzugt erfolgt die besagte Anpassung des Audiosignals des Fahrzeugs als eine Regelung eines oder mehrerer Parameter des besagten Audiosignals, wobei ein Sollwert der Regelung abhängig von einer vorgegebenen Hörbarkeit und/oder akustischen Wahrnehmbarkeit einer mit dem Audiosignal repräsentierten Inhalts und/oder zumindest eines Abschnitts der auditiven Kommunikation gewählt, insbesondere laufend angepasst wird.

Gemäß einer weiteren optionalen Ausgestaltung erfolgt zusätzlich ein Ermitteln einer Anwendbarkeit, insbesondere einer Erfolgswahrscheinlichkeit, dass die Parameter des Audiosignals bei bestimmten Parameter und/oder Inhalten der gesprochenen Sprache, insbesondere unter Berücksichtigung eines Hintergrundgeräuschs nicht hinreichend abwandelbar waren oder sind. Daraufhin erfolgt eine Auswahl einer Maßnahme oder einer Maßnahmenkombination in Bezug auf das Audiosignal des Fahrzeugs, insbesondere zum Verändern des Audiosignals des Fahrzeugs und/oder eine erneute Wiedergabe zumindest eines Abschnitts des Audiosignals erfolgt. Auch können auf dieser Basis können die Parameter zur weiteren bzw. erneuten Anpassung des Audiosignals ermittelt werden.

Als eine Wiederholung ist dabei auch zu verstehen, dass ein r neuer Abschnitt des Audiosignals bzw. ein Abschnitt des Audiosignals erneut erzeugt wird, zumindest ein nicht hinreichend übermittelter Inhalt, z.B. damit ausgeglichen, ergänzt oder ersetzt wird.

Auch kann ein Ermitteln eines Maßes für die Anwendbarkeit und/oder Erfolgswahrscheinlichkeit in Bezug auf die Ausgabe zumindest eines Abschnitts des auszugebenden Audiosignals, unter Berücksichtigung des ermittelten Parameter der auditiven Kommunikation und/oder zumindest eines weiteren im Innenraum des Fahrzeugs hörbaren akustischen Inhalts, z.B. eines Fahrgeräusches bzw. Motorgeräusches, z.B. auch in Bezug auf vorausdefinierte Optimierungskriterien, nicht hinreichend ist oder war, und daraufhin:
Auswahl einer Maßnahme in Bezug auf das auszugebende Audiosignal.

Beispielsweise kann ein Maß für eine zweckmäßige Anwendbarkeit der Anpassung des Audiosignals und/oder ein Maß der Erfolgswahrscheinlichkeit zumindest teilweise vorab, d.h. vor oder teilweise während der Ausgabe des Audiosignals erfolgen. Auch kann ein Maß für die Erfolgswahrscheinlichkeit in Bezug auf einen bereits in der Ausgabe befindlichen oder bereits ausgegebenen Abschnitt des Audiosignals ermittelt werden. Beispielsweise kann ein Maß für die Anwendbarkeit oder Erfolgswahrscheinlichkeit eine, insbesondere voraussichtliche, Erreichung eines Optimierungskriteriums, z.B. bezüglich einer Wahrnehmbarkeit des betreffenden Abschnitts der auditiven und/oder des Audiosignals, z.B. von einem oder mehreren bestimmten Sitzen des Fahrzeugs aus, repräsentieren.

Abhängig von dem ermittelten Maßes für die Anwendbarkeit und/oder Erfolgswahrscheinlichkeit können diverse in diesem Dokument beschriebene Parameter des Audiosignals, z.B. die Logik zur Anpassung des Audiosignals angepasst werden. Beispielsweise kann eine solche Maßnahme kann z.B. das Variieren des Zeitpunkts der Ausgabe zumindest eines Abschnitts des Audiosignals und/oder einer wiederholten Ausgabe eines Abschnitts des Audiosignals umfassen.

Alternativ oder zusätzlich kann zumindest ein Zeitparameter zur Ausgabe zumindest eines Abschnitts des Audiosignals einen (absoluten oder relativen) Zeitpunkt, insbesondere zu einem Anfang und/oder Ende oder der Dauer eines Zeitintervalls kennzeichnen, der zur Ausgabe des Audiosignals, insbesondere eines bestimmten Abschnitt des Audiosignals oder eines Audiosignals mit einem bestimmten Inhalt unter Berücksichtigung zumindest eines Optimierungskriteriums (explizit) nicht geeignet ist. Daraufhin kann die Ausgabe zumindest eines Abschnitts eines Audiosignals unter Berücksichtigung eines solchen Zeitparameters erfolgen. Gemäß einer weiteren optionalen Ausgestaltung erfolgt zusätzlich ein Ermitteln insbesondere Prädizieren, eines Parameters einer auditiven Kommunikation im Innenraum eines Fahrzeugs und es erfolgt ein Verändern zumindest eines Parameters des Audiosignals des Fahrzeugs abhängig von dem ermittelten, insbesondere prädizierten Parameter der auditiven Kommunikation.

Erfassen einer Stimme zumindest eines, insbesondere eines bestimmten Insassen des Fahrzeugs (oder auch das Ermitteln insbesondere Prädizieren, eines weiteren Parameters einer auditiven Kommunikation) kann beispielsweise mit Mitteln des Fahrzeugs, z.B. Mikrophonen einer Freisprecheinrichtung, z.B. der ins Fahrzeug integrierter Freisprecheinrichtung oder einer weiteren Sensorik im Innenraum des Fahrzeugs, beispielsweise einer Innenraumkamera, erfolgen.

Das Kommunikationsvorhabens und/oder einer Stimme kann als ein Parameter oder eine, z.B. zeitlich geordnete, Sequenz aus mehreren Parameterwerten, z.B. in Bezug auf die nahe Vergangenheit, und/oder etwa den aktuellen Zeitpunkt, und/oder eine Prädiktion für die nahe Zukunft, umfassen. Beispielsweise kann ein Parameter Kommunikationsvorhabens und/oder einer Stimme auch ein Maß der Veränderung der Werte eines bestimmten Parameterwerts im Verlauf der Zeit und/oder in Bezug auf ein auf den Raum bezogene Größe, z.B. Richtung oder Distanz repräsentieren.

Zumindest ein Parameter repräsentierend das besagte Kommunikationsvorhabens und/oder eine Stimme kann im Verfahren auf Basis von Sensordaten, einer Historie, z.B. im Zusammenhang mit einer oder mehreren Kommunikationen im Fahrzeuginnenraum oder Kommunikationen mit Beteiligung bestimmter Personen und/oder unter Berücksichtigung einer Wahrscheinlichkeitsrechnung, ermittelt werden. Beispielsweise kann zumindest ein Parameter der auditiven Kommunikation, insbesondere anhand eines Abgleichs bzw. Verrechnung einer Vielzahl der Parameter aus der Historie prädiziert werden.

Insbesondere kann ein Parameter kennzeichnend den Anfang und/oder Ende der Sprachmitteilung, Verlauf der Laustärke, Tonlage, etc., ermittelt werden.

Bei der auditiven Kommunikation kann es sich um ein Gespräch im Innenraum des Fahrzeugs (ein Monolog, ein Dialog oder ein multidirektionales Gespräch, quasi ein "Multilog", zwischen mehreren Personen im Fahrzeug) handeln.

Insbesondere umfasst zumindest ein Abschnitt der besagten auditiven Kommunikation eine sprachliche Botschaft, oder die zur Kommunikation bestimmter Laute eines Insassen im Innenraum des Fahrzeugs. Dabei kann es sich auch um ein Monolog handeln, wobei sich insbesondere zumindest ein potentieller Zuhörer im Fahrzeug befindet.

Bevorzugt kann das Verfahren umfassen: Erkennen, dass sich zumindest zwei Insassen im Fahrzeug befinden, insbesondere Ermitteln der Anzahl von Insassen im Innenraum des Fahrzeugs und eine Berücksichtigung der erkannten Information im Verfahren. Dabei kann beispielsweise bei einer Erkennung einer menschlichen Sprache und wenn sich zumindest zwei Insassen im Innenraum des Fahrzeugs befinden, andere Veränderung des Parameters eines im Innenraum auszugebenden Audiosignals erfolgen, im Vergleich zu dem Fall, bei dem erkannt wird, dass sich lediglich ein Insasse (z.B. nur der Fahrer bzw. Fahrerin) im Innenraum befindet.

Der ermittelte, insbesondere prädizierte Parameter der auditiven Kommunikation ist insbesondere ein akustischer Parameter, bevorzugt:
- ein Raumklangparameter, z.B. räumliche Verteilung des akutischen Signals der Sprache,
- ein Frequenzparameter, z.B. ein Energiedichtespektrum
- ein Parameter kennzeichnend Amplitudenverlauf, bzw. Amplitudenveränderung, bzw. Amplitudendynamik, bzw. eine sogenannte Dynamikkompression,
- ein Phasenparameter, z.B. Phasenverschiebungsparameter.

Es können auch mehrere Parameter der auditiven Kommunikation ermittelt und/oder prädiziert werden.

Gemäß einer weiteren optionalen Ausgestaltung betrifft die Veränderung des Parameters des Audiosignals zumindest einen Raumklangparameter, wobei, bevorzugt zumindest eine Richtung, aus der das Audiosignal des Fahrzeugs kommt oder gehört wird, insbesondere vom Fahrer des Fahrzeugs gehört wird, angepasst wird.

Bevorzugt wird im Verfahren die Belegung eines oder mehrerer Sitze (z.B. durch erwachsene Personen, Kinder, sogenannte Kinder-Sitze und/oder Babysitze) ermittelt. Besonders bevorzugt wird im Verfahren die Anzahl und/oder Verteilung der im Fahrzeug anwesenden Insassen auf bestimmte Sitzplätze bzw. Sitzpositionen innerhalb des Fahrzeuginnenraums ermittelt und im Verfahren berücksichtigt.

Die Ermittlung der Anzahl und/oder der Verteilung der im Fahrzeug anwesender Personen kann in einem vereinfachten Fall über die Auswertung der Betätigung entsprechender Türkontakte, und/oder Sicherheitsgurt-Anschnallerkennung, und/oder durch eine an sich dem Fachmann bekannte, sensorische, z.B. kapazitive Sitzbelegungserkennung erfolgen.

Ferner kann die Ermittlung der Anzahl und/oder der Verteilung der im Fahrzeug anwesender Personen auch über die Anzahl der im Fahrzeuginnenraum erkannten, insbesondere lokalisierten mobilen Anwendergeräte, z.B. Mobilfunkendgeräte und/oder Wearables (z.B. Smart Watches) erfolgen. Ferner kann Anzahl und/oder der Verteilung der im Fahrzeug anwesender Personen mittels sogenannter Smart-Closes oder einer Nahfeldkommunikation mittels NFC (= Near Field Communication) oder z.B. RFID-Chips (= Radio Frequency Identification) erfolgen. Eine Identifikation der persönlichen Identität der Insassen ist im Verfahren nicht notwendig. Dennoch kann auch eine derartige Identifikation bestimmter Personen, insbesondere zum Zuweisen eines bestimmten für das Verfahren maßgeblichen Nutzerprofils, ausgeführt werden. Beispielsweise kann auch ermittelt werden, welche der anwesenden Personen an welchem der Sitze des Fahrzeugs sitzt, beispielsweise um daraufhin bestimmte Optimierungskriterien für die entsprechende Personen oder Sitze zuzuordnen.

Insbesondere kann auch eine Zuordnung zwischen den Personen oder Personengruppen, z.B. Personengruppen: ein Erwachsener, ein Kind, ein Baby ohne Babysitz, ein Babysitz mit oder ohne Baby zu bestimmten Sitzpositionen bzw. Sitzen innerhalb des Fahrzeugs festgestellt werden. Das Verfahren kann auch unterschiedliche Personengruppen (jeweils als "Sprecher" und zumindest potentielle "Zuhörer") unterschiedlich angewandt werden. Beispielsweise können Verfahren vorgegebene Audio-Parameter, z.B. Grenzparameter berücksichtigt werden, die in einem bestimmten Sitzbereich, z.B. im Sitzbereich eines Kindes oder Babys überschritten und/oder nicht überschritten werden sollen.

Daraufhin kann eine derartige Veränderung zumindest eines auszugebenden Audiosignals ausgeführt werden, dass sowohl eine Verschiebung der in bestimmten Teilen des Fahrzeuginnenraums erzeugten bzw. zu erzeugenden akustischen Leistung und/oder eine Veränderung der Phase des aus einem oder mehreren bestimmten Lautsprechern ausgegebenen Audiosignals erfolgen. Insbesondere kann eine frequenzabhängige Veränderung einer Phasenverschiebung zwischen dem durch zumindest zwei Lautsprecher des Fahrzeugs ausgegebenen Audiosignals ausgeführt werden.

Optional betrifft das Verändern des Audiosignals des Fahrzeugs einen oder mehrere Raumklangparameter. Dabei können im Verfahren (mit der Veränderung des einen oder mehreren Raumklangparameter) eine oder mehreren (auch virtuellen, zumindest durch menschliche Wahrnehmung im Innenraum des Fahrzeugs hörbaren) Klangquellen erzeugt werden.

Beispielsweise repräsentiert eine auf Basis des Audiosignals des Fahrzeugs erzeugte Klangquelle abhängig von einem im Verfahren ermittelten Raumklangparameter erzeugt, der z.B. eine Richtung, Abstand, Position, akustische Parameter einer Klangquelle bestimmt, die mittels des Audiosystems des Fahrzeugs erzeugt werden.

Das Erzeugen der Klangquellen im Verfahren kann sich jeweils auf einen bestimmten Innenraumbereich beziehen, aus welchem aus diese wahrnehmbar (hörbar) gemacht werden. Bevorzugt kann ein Raumklangparameter auch bestimmen, welche (wahrnehmbare) Richtung, Abstand, Position, akustische Parameter zu zumindest einer Klangquelle, welche in einem räumlichen Bereich des Innenraums, und/oder im Zusammenhang mit einem Sitzplatz und/oder von einer Person, Person zugehörig zu einer Personengruppe oder einer bestimmten Person wahrnehmbar gemacht werden soll. Beispielsweise werden auf Basis des auszugebenden (anzupassenden) Audiosignals, abhängig von den besagten Parameter der auditiven Kommunikation, für zumindest zwei verschiedene räumliche Bereiche des Innenraums des Fahrzeugs oder für zwei bestimmte Insassen, bzw. Insassen an bestimmten Sitzen, auditiv wahrnehmbare Klangquellen erzeugt werden, die unterschiedliche, jeweils zweckmäßig angepasste, objektiv messbare oder subjektiv von den tatsächlich anwesenden oder angenommenen Insassen, wahrnehmbaren akustischen Parametern aufweist.

Bevorzugt kann alternativ oder zusätzlich eine mit Mitteln des Raumklangverfahrens erzeugte, subjektiv empfundene Richtung, aus der das Audiosignal kommt, abhängig von dem, insbesondere prädizierten Parameter der auditiven Kommunikation, beispielsweise abhängig von einem erkannten Kommunikationsvorhaben und/oder einer Stimme zumindest eines Insassen des Fahrzeugs verschoben werden. Dies kann besonders bevorzugt in Kombination mit einem Variieren der Amplitude und/oder Frequenzparameter des Audiosignals erfolgen.

Besonders bevorzugt repräsentiert der zumindest eine (anzupassende) Raumklangparameter einen oder mehrere Parameter zum Erzeugen von einer oder mehreren (auch virtuellen, zumindest durch menschliche Wahrnehmung hörbaren) Klangquellen. Beispielsweise repräsentiert ein Raumklangparameter eine Richtung, Abstand, Position, akustische Parameter einer oder mehreren Klangquellen, die mittels des Audiosystems des Fahrzeugs erzeugt werden. Das Erzeugen der Klangquellen im Verfahren kann sich jeweils auf einen bestimmten Innenraumbereich beziehen, aus welchem aus diese (besonders gut oder in einem zweckmäßigen Maße) wahrnehmbar gemacht werden. Bevorzugt kann ein Raumklangparameter auch bestimmen, welche (wahrnehmbare) Richtung, Abstand, Position, akustische Parameter zu zumindest einer Klangquelle, welche in einem räumlichen Bereich des Innenraums, und/oder im Zusammenhang mit einem Sitzplatz und/oder von einer Person, Person zugehörig zu einer Personengruppe oder einer bestimmten Person wahrnehmbar gemacht werden soll. Beispielsweise werden auf Basis des anzupassenden Audiosignals, abhängig von den besagten Parameter der auditiven Kommunikation, für zumindest zwei verschiedene räumliche Bereiche des Innenraums des Fahrzeugs oder für zwei bestimmte Insassen, bzw. Insassen an bestimmten Sitzen, auditiv wahrnehmbare Klangquellen erzeugt werden, die unterschiedliche, jeweils zweckmäßig angepasste, objektiv messbare oder subjektiv von den tatsächlich anwesenden oder angenommenen Insassen, wahrnehmbaren akustischen Parametern aufweist.

Auch kann ein Raumklangparameter im Verfahren abhängig von der ermittelten Verteilung der Personen auf die Sitzplätze des Fahrzeugs und/oder ihrer Positionen derart angepasst werden, dass eine kumulierter Wert für zumindest zwei Personen, repräsentierend die Güte der Wahrnehmbarkeit und/oder Verständlichkeit zumindest eines Audiosignals und/oder zumindest einer sprachlichen Kommunikation erhöht bzw. zu einem Zielwert hin gesteuert wird.

Beispielsweise kann nur oder überwiegend ein bestimmter Teil des Audiosignals, der in einem Raumklangsystem, z.B. in einem Kinoformat, die Sprache (z.B. die Stimme eines Protagonisten) repräsentiert, verändert, insbesondere für die Wahrnehmung zumindest eines Insassen räumlich verschoben werden. Dabei kann einhergehend ein anderer Teil, bzw. Kanal des Audiosignals, z.B. repräsentierend eine im Raumklangsystem auszugebende Hintergrundmusik, z.B. weniger oder auf eine andere Weise, abhängig von dem ermittelten, insbesondere prädizierten Parameter der auditiven Kommunikation angepasst werden.

Dabei kann im Verfahren eine Optimierung der Hörbarkeit bestimmter Teile, insbesondere Kanäle eines Raumklangs bzw. den Raumklang umfassenden Audiosignals erfolgen.

Auch kann im Verfahren ein Maß der Relevanz bestimmter Abschnitte des (auszugebenden) Audiosignals des Fahrzeugs für bestimmte Insassen, z.B. zugehörig zu bestimmten Personengruppen, Insassen an bestimmten Sitzen des Fahrzeugs ermittelt und berücksichtigt werden. Beispielsweise kann eine Anpassung zumindest eines Abschnitts des Audiosignals derart erfolgen, dass ein Alter (Baby, Kind, Teenager, Erwachsener, Senior, etc.) und/oder Geschlecht eines Insassen berücksichtigt wird.

Auch können auch die für einen bestimmten Insassen, z.B. Insassen zugehörig zu einer bestimmten Personengruppe, spezifischen Eigenschaften der auditiven Wahrnehmung, z.B. aus der Psychoakustik bekannte Phänomene bzw. Unterschiede, ermittelt berücksichtigt werden.

In einem vereinfachten Fall können die Interessen und/oder spezifischen Eigenschaften der Wahrnehmung aus einem hinterlegten oder ermittelten Nutzerprofil ermittelt, insbesondere geschätzt werden. Dies kann z.B. in Form der Abweichungen oder Unterschieden, z.B. im Vergleich zu standardisierten Werten.

Ferner kann auch das Gehirn des Menschen die Inhalte dadurch wesentlich besser verarbeiten. Auch die entsprechenden Inhalte (die zu den Audioreizen passen) können somit bei ihrer Wahrnehmung durch einen Menschen sehr viel besser "sortiert" und inhaltlich verarbeitet werden.

Bevorzugt kann hierbei auch unterschieden werden, wie viele Personen, insbesondere welche der Personen mit welcher Person auditiv kommunizieren (sprechen) und abhängig davon ein oder mehrere Parameter des Audiosignals in Bezug auf den Raumklang bzw. räumliche Verteilung des Audiosignals zweckmäßig angepasst werden.

Beispielsweise kann im Verfahren abhängig von dem zumindest einen Parameter der Kommunikation:
Eine, Veränderung, insbesondere Anpassung des auszugebenden Audiosignals eine Abwandlung der Frequenzkomponenten des Audiosignals umfassen, die eine Überdeckung mit dem Frequenzbereich der menschlichen Sprache, insbesondere der Stimme des Sprechers aufweisen, in Frequenzkomponenten, die eine geringere Überdeckung mit dem Frequenzbereich der menschlichen Stimme, insbesondere der Stimme des Sprechers aufweisen.

Beispielsweise kann im Verfahren abhängig von dem zumindest einen Parameter der Kommunikation:
Eine, Veränderung, insbesondere Anpassung auf das im Frequenzbereich kodierten oder in Frequenzbereich transformierte Audiosignal angewandt werden, wobei die spektralen Eigenschaften, insbesondere ein Frequenzdichtespektrum zumindest eines Teils des Audiosignals, angepasst werden.

Gemäß einer weiteren optionalen Ausgestaltung umfasst die Veränderung des Parameters des Audiosignals eine Abwandlung des Audiosignals im Frequenzbereich, derart dass Signalkomponenten des Audiosignals, die den Frequenzbereich der menschlichen Sprache, insbesondere innerhalb der Stimme des Sprechers betreffen, derart abgewandelt werden, dass die Signalenergie auf eine oder mehrere Frequenzbereiche verteilt wird, die den Frequenzbereich der menschlichen Stimme, insbesondere der Stimme des Sprechers, nicht oder in einem geringeren Maße betreffen.

Mit anderen Worten kann hierbei eine Transformation der Frequenzen des Audiosignals derart erfolgen, dass die Frequenzen der Signalkomponenten des Audiosignals, die einen wesentlichen Teil ihrer Signalenergie innerhalb des Frequenzbereichs der menschlichen Sprache, insbesondere innerhalb der Stimme des Sprechers aufweisen, in einen oder mehrere Frequenzbereiche transformiert werden, der oder die den Frequenzbereich der menschlichen Sprache nicht oder weniger betreffen.

Beispielsweise kann im Verfahren abhängig von dem zumindest einen Parameter der Kommunikation:
Eine, Veränderung, insbesondere Anpassung des auszugebenden Audiosignals eine Abwandlung der Frequenzkomponenten des Audiosignals umfassen, die eine Überdeckung mit dem Frequenzbereich der menschlichen Sprache, insbesondere der Stimme des Sprechers aufweisen, in Frequenzkomponenten, die eine geringere Überdeckung mit dem Frequenzbereich der menschlichen Stimme, insbesondere der Stimme des Sprechers aufweisen.

Beispielsweise kann im Verfahren abhängig von dem zumindest einen Parameter der Kommunikation:
Eine, Veränderung, insbesondere Anpassung auf das im Frequenzbereich kodierten oder in Frequenzbereich transformierte Audiosignal angewandt werden, wobei die spektralen Eigenschaften, insbesondere ein Frequenzdichtespektrum zumindest eines Teils des Audiosignals, angepasst werden.

Dabei kann die Abwandlung, insbesondere Transformation mehrerer Signalkomponenten des Audiosignals derart erfolgen, dass ein mathematisches Verhältnis zwischen den Signalkomponenten, insbesondere eine oder mehrere Proportionen z.B. betreffend Frequenzdichtespektrum, im Wesentlichen erhalten bleiben.

Insbesondere kann dabei auch eine Frequenzbandtransformation angewandt werden, wobei die Frequenzkomponenten des Audiosignals, die innerhalb des Frequenzbandes der menschlichen Sprache, insbesondere innerhalb der Stimme des Sprechers, liegen zu den Frequenzbereichen hin transformiert werden, die im Wesentlichen außerhalb des vorgenannten, für die menschliche Kommunikation besonders wichtigen, Frequenzbandes liegen.

Gemäß einer weiteren optionalen Ausgestaltung umfasst die Veränderung des Parameters des Audiosignals eine zumindest teilweise Verlagerung der Frequenzen des Audiosignals, die zumindest statistisch den Frequenzen des Sprachsignals des Sprechers entsprechen, insbesondere in Bezug auf eine Position und/oder Kopfausrichtung zumindest eines Zuhörers von einer ersten Raumrichtung, in der sich der Sprecher befindet zu einer zweiten Raumrichtung, die abweichend als die erste Raumrichtung, insbesondere im Wesentlichen entgegengesetzt zu der ersten Richtung, angeordnet ist.

Eine zumindest teilweise Verlagerung ist hierbei beispielsweise derart ausgebildet, dass das Audiosignal aus der Richtung des Sprechers zumindest mit einem Frequenzbereich, z.B. von 120 - 6000 Hz, insbesondere 350 - 3000 Hz verringert wird und Frequenzen des Audiosignals aus dem Audiosystem des Fahrzeugs, das im Wesentlichen aus einer anderen Richtung als die Richtung des Sprechers kommt, und in einem Frequenzbereich von 200 - 6000 Hz, insbesondere 350 - 3000 Hz verstärkt wird.

Besonders bevorzugt erfolgt dabei eine räumliche Verlagerung des Audiosignals mit bestimmten Frequenzen derart, dass eine insgesamt, in Summe beim Zuhörer ankommende, Frequenzgewichtung des Audiosignals im Wesentlichen unverändert bleibt oder zumindest wesentlich geringer ausfällt, als die Verringerung der Frequenzen aus der Richtung des Sprechers.

Besonders bevorzugt können unterschiedliche Audiosignale, insbesondere unterschiedliche Abschnitte bzw. Kanäle eines mehrkanaligen Audiosignals im Verfahren unterschiedlich verändert, insbesondere angepasst. Diese können in jeweils bestimmter Art und Weise, z.B. zu Erreichung eines bestimmten, durch ein Optimierungskriterium angestrebten Ziels, angepasst werden.

Bevorzugt können im Verfahren die (überwiegend) Sprache repräsentierende Audiosignale, bzw. Abschnitte oder Kanäle eines Audiosignals, beispielsweise Radiosendungen, anders, insbesondere stärker angepasst werden, als die (überwiegend) Musik repräsentierende Audiosignale, bzw. Abschnitte oder Kanäle eines Audiosignal.

Dabei kann das Verfahren einen Schritt zur Auswertung eines, z.B. von einer Audioquelle kommenden Audiosignals, wobei eine Indikator für die Zusammensetzung des Inhalts des Audiosignals, z.B. Anteile von Sprache, Gesang, Musikhintergrund, szenische Hintergrundgeräusche, ermittelt und im Verfahren berücksichtigt wird.

Gemäß einer weiteren optionalen Ausgestaltung umfasst das Verfahren zusätzlich ein Einlernen einer bestimmten Stimme und/oder einer bestimmten körperlichen Regung eines Sprechers (sprechenden Insassen) zu einem oder mehreren (früheren) Zeitintervallen. Daraufhin erfolgt bei einer Wiedererkennung der bestimmten Stimme und/oder der bestimmten körperlichen Regung eines Sprechers zu einem oder mehreren späteren Zeitintervallen eine Anwendung einer optimierten oder vorgespeicherten Anpassung des Audiosignals für die Stimme des Sprechers.

Bevorzugt ergibt sich hierbei eine folgende Abhängigkeit:
- Wenn eine körperliche Regung, z.B. ein bestimmtes Lippenbewegungsmuster erkannt wird, bei einer Person, die bisher im Fahrzeug immer leise und/oder undeutlich gesprochen hat, dann wird das Audiosignal vergleichsweise stark, und passend zu der Sprachfrequenz des Sprechers angepasst.
- Wenn eine körperliche Regung, z.B. ein bestimmtes Lippenbewegungsmuster erkannt wird, bei einer Person, die bisher im Fahrzeug immer laut und/oder deutlich gesprochen hat, dann wird das Audiosignal nicht oder vergleichsweise schwach, und passend zu der Sprachfrequenz des Sprechers angepasst.

Gemäß einer weiteren optionalen Ausgestaltung umfasst das Verfahren zusätzlich ein Einlernen einer bestimmten körperlichen Regung, die dem Sprechen, insbesondere bei einem bestimmten Insassen, einer sprachlichen Kommunikation vorausgeht zu einem oder mehreren Zeitintervallen. Daraufhin erfolgt bei einer Wiedererkennung der körperlichen Regung, insbesondere auch beim Wiedererkennen des bestimmten Sprechers und/oder der für den Sprecher aus mehreren Zeitintervallen typischen körperlichen Regung eine Anwendung einer optimierten oder vorgespeicherten Anpassung des Audiosignals für die Stimme des Sprechers.

Besonders bevorzugt kann hierbei auch eine, einer bestimmten Stimmlage bzw. Sprachton vorausgehende körperliche Regung erkannt werden, und daraufhin eine (noch viel präzisere) Anpassung des Audiosignals erfolgen.

Im Verfahren können mehrere eingelernte Stimmen in Form eines oder mehreren, für die Stimme typische Parameterwerte berücksichtigt werden. Auf Basis solcher Parameter können Erkennungsdaten für die Stimmen der Insassen ermittelt bzw. im Verfahren verarbeitet werden. Beispielsweise können die Erkennungsdaten für eine oder mehrere Stimmen der Insassen (auch vorab) auf Basis einer Sprachsteuerung, Freisprechvorrichtung des Fahrzeugs oder eines mobilen Anwendergeräts (z.B. beim Telefonieren) gewonnen werden. Auch können körperliche Regungen der Insassen (auf eine vergleichbare Art und Weise) eingelernt und/oder im Verfahren berücksichtigt werden.

Insbesondere bezieht sich das Einlernen Stimmen und/oder körperliche Regungen auf bestimmte, für bestimmte Insassen, insbesondere Insassen zugehörig zu bestimmten Personengruppen, charakteristische Merkmale, z.B. entsprechende qualitative und/oder quantitative Werte oder Zusammenhänge zwischen solchen.

Bevorzugt bezieht sich ein Einlernen auf das Ermitteln eines (naturwissenschaftlichen, mathematischen) Zusammenhangs zwischen einem Parameter einer oder mehreren körperlichen Regungen, die abhängig von bestimmten Mustern der Gestik und/oder Mimik sind, und einer einhergehenden oder nachfolgenden auditiven Kommunikation, insbesondere dem Sprechen einer Person (Insassen). Dies kann im Verfahren in Bezug auf eine bestimmte Person oder in Bezug auf eine Person mit bestimmten, z.B. sensorisch erkennbaren Eigenschaften (Körpergröße, Kleidung, Bewegungsparameter, Personengruppe, etc.) oder in Bezug auf eine Person an einer bestimmten Raumposition und/oder an einem Sitzplatz des Fahrzeugs eingelernt werden.

Erfindungsgemäß kann das besagte Einlernen ferner umfassen: Erfassen eines Feedback-Indikators, der kennzeichnend ist für eine zumindest einmal, zweckmäßige, passende bzw. zufriedenstellende Anpassung des Audiosignals, und daraufhin eine Berücksichtigung des Feedback-Indikators bei einer wiederholten Ausführung des Verfahrens.

Bevorzugt erfolgt die besagte Veränderung des Audiosignals des Fahrzeugs als eine Regelung eines oder mehrerer Parameter des besagten Audiosignals, wobei ein Sollwert der Regelung abhängig von einer vorgegebenen Hörbarkeit und/oder akustischen Wahrnehmbarkeit einer mit dem Audiosignal repräsentierten Inhalts und/oder zumindest eines Abschnitts der auditiven Kommunikation gewählt, insbesondere laufend angepasst wird.

Gemäß eines zweiten Aspekts zeichnet sich die Erfindung aus durch eine Vorrichtung zur Steuerung eines Audiosystems eines Fahrzeugs, wobei die Vorrichtung dazu ausgebildet ist das Verfahren auszuführen. Die erfindungsgemäße Vorrichtung weist die gleichen Vorteile auf, wie diese vorstehend in Verbindung mit dem erfindungsgemäßen Verfahren beschrieben wurden. In einer zweckmäßigen Ausgestaltung weist die Vorrichtung weitere Mittel zur Durchführung des Verfahrens auf.

Gemäß eines dritten Aspekts zeichnet sich die Erfindung aus durch ein mobiles Anwendergerät, das eine Schnittstelle mit dem Fahrzeug umfasst und eingerichtet ist, zumindest einen Teil des Verfahrens auszuführen.

Gemäß eines vierten Aspekts zeichnet sich die Erfindung aus durch ein Computerprogramm, insbesondere ein Computerprogrammprodukt umfassend das Computerprogramm, wobei das Computerprogramm ausgebildet ist, bei seiner Ausführung auf einer Recheneinheit einen wesentlichen Teil des erfindungsgemäßen Verfahrens oder eine vorteilhafte Ausgestaltung des Verfahrens gemäß einem oder mehrerer weiterer Merkmale des Verfahrens durchzuführen. Insbesondere handelt es sich bei dem Computerprogramm um ein Computerprogramm, welches beispielsweise als eine App ( = "Applikation") auf einer im Fahrzeug verbauten oder mitführbaren Vorrichtung umfassend zumindest eine Recheneinheit lauffähig ist.

Das Computerprogramm bzw. Computerprogrammprodukt umfasst dabei einen ausführbaren Programmcode, der bei einer Ausführung durch eine Vorrichtung umfassend eine Recheneinheit, zumindest einen Teil des Verfahrens gemäß einem vorliegend beschriebenen Aspekt oder eine vorteilhafte Ausgestaltung des vorliegend beschriebenen Verfahrens ausführt. Das Computerprogrammprodukt kann dabei als ein Update eines bisherigen Computerprogramms ausgebildet sein, welches beispielsweise im Rahmen einer Funktionserweiterung, beispielsweise im Rahmen eines sogenannten "Remote Software Update" die Teile des Computerprogramms bzw. des entsprechenden Programmcode für eine Vorrichtung des Fahrzeug umfasst.

Beim Fahrzeug handelt es sich im Rahmen dieser Beschreibung bevorzugt um ein Kraftfahrzeug, insbesondere ein PKW (= Personen-Kraft-Wagen). Dies ist vorteilhaft, weil das Innenraum eines solchen Fahrzeugs einen vergleichsweise knapp bemessenen, akustisch weitgehend isolierten bzw. abgeschlossenen Raum bildet in dem mehrere auditive Kommunikationen und ein oder mehrere Audiosignale innerhalb eines eng bemessenen Raums erzeugt und gehört werden sollen. Grundsätzlich kann das Verfahren aber auch auf andere Arten der Fahrzeuge, z.B. einen Bus, Zug, Wasserfahrzeug, Flugzeug, ggf. in einer sinngemäß angepassten Form angewandt werden.

Ausführungsbeispiele der Erfindung sind im Folgenden, ohne Einschränkung der Allgemeinheit, anhand der schematischen Zeichnung näher erläutert. Es zeigt:

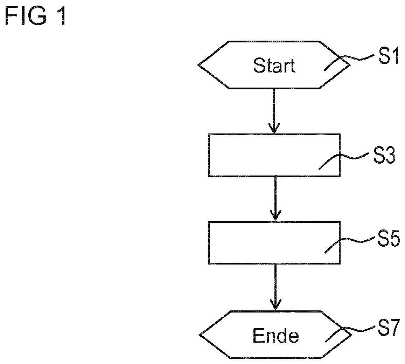

- Figur 1: Ein Ablaufdiagramm zur Steuerung eines Audiosystems eines Fahrzeugs.

Die Figur 1 zeigt ein Ablaufdiagramm zur Steuerung eines Audiosystems eines Fahrzeugs.

Das Programm kann von einer Vorrichtung oder verteilt von mehreren Vorrichtungen abgearbeitet werden. Die Vorrichtung umfasst hierfür insbesondere eine Recheneinheit, einen Programm- und Datenspeicher, sowie beispielsweise eine oder mehrere Kommunikationsschnittstellen.

Das Programm wird in einem Schritt S1 gestartet, in dem gegebenenfalls Variablen initialisiert werden können.

In einem Schritt S3 erfolgt ein Erfassen einer Stimme zumindest eines bestimmten Insassen des Fahrzeugs.

In einem Schritt S5 erfolgt ein Verändern zumindest eines Audiosignals des Fahrzeugs abhängig von der erfassten Stimme des Insassen.

Das Verändern umfasst in diesem Beispiel eine Anpassung des Audiosignals, insbesondere einzelner Kanäle eines Raumklangsignals, Proportionen zwischen einzelnen Kanälen, Vorschrift zum Verarbeiten (z.B. Mischen) einzelner Kanäle des Audiosignals, auch abhängig von bestimmten Optimierungskriterien.

Die Optimierungskriterien können dabei (in Bezug auf das Verfahren), z.B. ein insgesamt möglichst geringer Schallpegel im Innenraum, insbesondere an bestimmten Sitzpositionen, eine bessere subjektive Wahrnehmbarkeit und/oder Verständlichkeit der Kommunikation und/oder Inhalte des Audiosignals sein. Diese können z.B. mit den Nutzereinstellungen verändert werden.

Beispielsweise erfolgt abhängig von der erfassten Stimme zumindest eines, insbesondere eines bestimmten Insassen des Fahrzeugs ein Anpassen eines oder mehrerer Parameters der oder die kennzeichnend sind für die räumliche Aufteilung eines oder mehrerer auszugebenden Audiosignale, insbesondere Audiosignale mit unterschiedlichen Inhalten und/oder aus unterschiedlichen Audioquellen und/oder mehrerer Kanäle eines Raumklangsignals, innerhalb des Innenraums des Fahrzeugs.

Die Beschallung mit bestimmen Audiosignalen, von denen es nicht nur einen, sondern auch mehrere gegeben kann, kann auch durch die Auswahl der Lautsprecher bzw. die Optimierung der Balance zwischen bestimmten Lautsprechern ("links", "rechts", "center", "vorne", "hinten"), im Innenraum des Fahrzeugs angepasst werden. Weiterhin können alternativ oder zusätzlich Phasenparameter zumindest einer Signalkomponente eines Audiosignals derart angepasst werden, dass bei einem Insassen ein subjektiver Eindruck erzeugt wird, dass die einem (bestimmten) Teils bzw. Abschnitt eines Audioinhalts entsprechende Klangquelle aus einer bestimmten Richtung kommt und/oder sich in einer bestimmten Entfernung vom Insassen befindet und/oder bewegt wird.

Dabei kann der Parameter des zumindest einen oder zwei von den auszugebenden Audiosignalen derart angepasst werden, dass sich eine (optimierte) Verteilung der zweier unterschiedlichen darin repräsentierten Audio-Inhalte innerhalb des Innenraums des Fahrzeugs ergibt. Insbesondere kann dabei von einer (in einem Raumklangsignal der Audioquelle möglicherweise vorgesehenen) Verteilung bzw. Abbildung der Teile des Audio-Inhalts auf bestimmte räumliche Bereiche und/oder Richtungen abgewichen werden.

Ferner können im Verfahren auch die Eigenschaften der Ausbreitung, Dämpfung, Reflektion akustischer Wellen, insbesondere aus mehreren Frequenzbereichen im Innenraum des Fahrzeugs, berücksichtigt werden. Dabei können die entsprechenden Parameter, z.B. ein Datensatz repräsentierend ein akustisches Modell des Fahrzeuginnenraums, im Verfahren eingelesen und berücksichtigt werden.

Ferner kann im Verfahren kann eine Zuordnung zwischen den (voreingestellten, ermittelten, oder geschätzten) Interessen der Insassen, z.B. bestimmter Personen, Insassen zugehörig zu bestimmten Personengruppen einerseits und der Arten und/oder Inhalten des Audiosignals andererseits berücksichtigt werden.

Auch kann ein Maß der Relevanz bestimmter Abschnitte des Audiosignals für bestimmte Insassen, z.B. zugehörig zu bestimmten Personengruppen, Insassen an bestimmten Sitzen des Fahrzeugs ermittelt und berücksichtigt werden. Beispielsweise kann eine Anpassung zumindest eines Abschnitts des Audiosignals derart erfolgen, dass ein Alter (Baby, Kind, Teenager, Erwachsener, Senior, etc.) und/oder Geschlecht eines Insassen berücksichtigt wird. Dabei können auch die für einen bestimmten Insassen, z.B. Insassen zugehörig zu einer bestimmten Personengruppe, spezifischen Eigenschaften der auditiven Wahrnehmung, z.B. aus der Psychoakustik bekannte Phänomene bzw. Unterschiede, ermittelt berücksichtigt werden. In einem vereinfachten Fall können die Interessen und/oder spezifischen Eigenschaften der Wahrnehmung aus einem hinterlegten oder ermittelten Nutzerprofil ermittelt, insbesondere geschätzt werden. Dies kann z.B. in Form der Abweichungen oder Unterschieden, z.B. im Vergleich zu standardisierten Werten.

In einer alternativen oder zusätzlichen Variante der Erfindung ist vorgesehen, dass abhängig von dem erkannten Thema, Intonation und Richtung der Kommunikation, der an der Kommunikation beteiligten, bestimmten Insassen, eine Entscheidung zur Ausgabe eines von zwei oder mehreren unterschiedlichen Audiosignalen, z.B. aus unterschiedlichen Audiosignalquellen und/oder mit unterschiedlichen Inhalten, getroffen wird. Beispielsweise kann ein Umschalten zwischen zumindest zwei unterschiedlichen Audiosignalen, insbesondere mit wesentlich unterschiedlichen Inhalten, Themen, Stillrichtungen oder aus unterschiedlichen Audioquellen, ausgeführt werden.

Beispielsweise kann, wenn Eheleute bzw. Partner über ein Beziehungsthema, ein Thema betreffen Kinder, ein typisches Streitthema, sprechen und die entsprechenden (typischen, objektiv erfassbaren) Merkmale bzw. Parameter von diesem Thema erkannt werden, ein Abschnitt des Audiosignals mit einem passenden Inhalt, z.B. ein ruhigerer Musiktitel oder Programm (oder ein Abschnitt des Audiosignal der einen gewünschten psychologischen Effekt bewirken kann) ausgegeben wird, insbesondere anstatt von einem bisher ausgegebenen oder geplanten, z.B. einem eher unruhigen Inhalt.

Optional kann im Verfahren eine (für die Person selbst mehr oder minder bewusste oder intuitiv oder reflexartig ausgeführte) körperliche Regung, die der Absicht in eine bestimmte Richtung zuzuhören, z.B. umfassend eine Kopfdrehung oder eine Hand am rechten Ohr oder am linken Ohr, ermittelt werden und im Verfahren verarbeitet werden. In einem Beispiel kann dabei ein Parameter, insbesondere repräsentieren die Signallautstärke des aus der jeweiligen Richtung auszugebenden Audiosignals bzw. des Inhalts aus einer betreffenden, bestimmten Richtung verändert, in diesem Beispiel erhöht werden, und/oder ein Abschnitt des Audiosignals, z.B. der letzte Satz oder Phrase, können wiederholt werden.

Beispielsweise kann eine Umverteilung der ausgegebenen Audio-Inhalte zwischen zumindest zwei Raumbereichen des Fahrzeugs erfolgt, indem z.B. der vordere linke Bereich stärker und/oder mit veränderten Frequenzcharakteristik als der hintere rechte Bereich mit einem bestimmten Audio-Inhalt beschallt wird. Es kann somit eine Verteilung zwischen Vorder- und Rücksitzen, zwischen Fahrersitz und den übrigen Sitzen oder zwischen der rechten und der linken Hälfte des Innenraums erfolgen. Hierdurch kann beispielsweise eine auditive Kommunikation eines Insassen, der den Beifahrersitz belegt und sich an Insassen auf der Rückbank wendet, dadurch verbessert werden, dass beispielsweise ein über die hinteren Lautsprecher auszugebenden bzw. ausgegebenes Motorgeräusch bzw. Fahrgeräusch im Bereich der Rückbank wesentlich abgeschwächt und/oder mit veränderten Parametern ausgegeben wird. Das über die, dem Fahrersitz zugewandten, Lautsprecher ausgegebene Motorgeräusch bzw. Fahrgeräusch kann demgegenüber fortbestehen bleiben.

Dabei können z.B. die sogenannten, insbesondere Klangquellen für zumindest zwei Audiosignale, die unterschiedlichen Audio-Inhalten und/oder Signalquellen entsprechen, abhängig von dem zumindest einen ermittelten Position eines Sprechers (z.B. des aktuell auditiv kommunizierenden Insassen) gesteuert, insbesondere geregelt werden.

Beispielsweise kann eine Zuordnung eines oder mehrerer Kanäle eines Raumklangsignals zu bestimmten physikalischen Lautsprecher und/oder virtuelle Klangquellen abhängig von der Kopfposition und/oder Kopfrichtung und/oder Blickrichtung des Insassen angepasst werden.

In einer alternativen oder zusätzlichen Variante der Erfindung ist vorgesehen, dass abhängig von dem erkannten Thema, Intonation und Richtung der Kommunikation, der an der Kommunikation beteiligten, bestimmten Insassen, eine Entscheidung zur Ausgabe eines von zwei oder mehreren unterschiedlichen Audiosignalen, z.B. aus unterschiedlichen Audiosignalquellen und/oder mit unterschiedlichen Inhalten, getroffen wird. Beispielsweise kann ein Umschalten zwischen zumindest zwei unterschiedlichen Audiosignalen, insbesondere mit wesentlich unterschiedlichen Inhalten, Themen, Stillrichtungen oder aus unterschiedlichen Audioquellen, ausgeführt werden. Beispielsweise kann, wenn Eheleute bzw. Partner über ein Beziehungsthema, ein Thema betreffen Kinder, ein typisches Streitthema, sprechen und die entsprechenden (typischen, objektiv erfassbaren) Merkmale bzw. Parameter von diesem Thema erkannt werden, ein Abschnitt des Audiosignals mit einem passenden Inhalt, z.B. ein ruhigerer Musiktitel oder Programm (oder ein Abschnitt des Audiosignal der einen gewünschten psychologischen Effekt bewirken kann) ausgegeben wird, insbesondere anstatt von einem bisher ausgegebenen oder geplanten, z.B. einem eher unruhigen Inhalt.

Optional kann im Verfahren eine (für die Person selbst mehr oder minder bewusste oder intuitiv oder reflexartig ausgeführte) körperliche Regung, die der Absicht in eine bestimmte Richtung zuzuhören, z.B. umfassend eine Kopfdrehung oder eine Hand am rechten Ohr oder am linken Ohr, ermittelt werden und im Verfahren verarbeitet werden. In einem Beispiel kann dabei die Signallautstärke des auszugebenden Audiosignals bzw. des Inhalts aus einer betreffenden, bestimmten Richtung erhöht werden, oder ein Abschnitt des Audiosignals, z.B. der letzte Satz oder Phrase wiederholt werden.

Insbesondere kann ein zeitliches Variieren der räumlichen Verteilung der Audio-Inhalte (eine sich über die Zeit verändernde, adaptive räumliche Verteilung) ausgeführt werden. Das Variieren der räumlichen Verteilung der Audio-Inhalte kann abhängig von einer erkannten Veränderung, insbesondere einer Prädiktion einer Veränderung des zumindest einen Parameters der auditiven Kommunikation erfolgen.

Insbesondere wird im Verfahren eine subjektiv empfundene Richtung und/oder Entfernung, und/oder ein subjektiv empfundener Ort, an dem ein bestimmter durch das Audiosignal repräsentierter Inhalts durch die menschliche (binourale) akustische Wahrnehmung empfunden (gehört) wird, angepasst. Beispielsweise können dabei die den bestimmten Inhalten des Audiosignals entsprechenden Klangquellen hinsichtlich ihrer wahrgenommenen Position und/oder Richtung und/oder Entfernung variiert werden.

Im Verfahren kann ein oder mehrere Phasenparameter, insbesondere ein Phasenversatz zumindest einer Signalkomponente der Teile des Audiosignals oder zweier Audiosignale die aus zumindest zwei unterschiedlichen Lautsprechern im Innenraum ausgegeben wird bzw. auszugeben sind, zweckmäßig angepasst werden.

Insbesondere kann dabei eine Steuerung, bevorzugt Regelung eines Parameters eines oder mehrerer auszugebenden Audiosignale oder Kanäle eines auszugebenden Raumklangsignals, abhängig vom dem erfassten Kommunikationsvorhaben und/oder der Stimme zumindest eines, insbesondere eines bestimmten Insassen des Fahrzeugs und/oder eines Insassen an einem bestimmten Sitzplatz des Fahrzeugs ausgeführt werden. Dabei können die Parameter des Audiosignals auch derart angepasst werden, dass sich eine sogenannte Umhüllende und/oder ein integrierter Wert und/oder ein tiefpassgefilterter Wert zumindest eines Parameters innerhalb vorausbestimmter Grenzen ergibt.

Beispielsweise kann je nachdem an welchen Sitz Insassen des Fahrzeugs innerhalb des Fahrzeugs sitzt, und/oder in welche Richtung der erste Insasse kommuniziert, das im Innenraum des Fahrzeugs auszugebende Audiosignal anders, insbesondere stärker angepasst werden, als auf das Sprechen eines weiteren, zweiten Insassen im Innenraum des Fahrzeugs, der sich in auf einem anderen Sitz innerhalb des Innenraums befindet.

In einem Schritt S7 wird das Programm beendet und kann gegebenenfalls wieder in dem Schritt S1 gestartet werden.

Der Verfahren kann optional einen oder mehrere der folgenden Schritte umfassen:
Einen Schritt bei dem auch erkannt wird, dass es sich bei der erfassten Stimme um eine Personenstimme, insbesondere um eine Stimme einer bestimmten Person oder bestimmten Personengruppe, handelt und das Verändern des Audiosignals des Fahrzeugs abhängig von der Erkennung der Stimme als eine Personenstimme, insbesondere abhängig vom Erkennen der Stimme einer bestimmten Person oder Personengruppe erfolgt.

Einen Schritt bei dem die Stimme eines Sprechers im Innenraum des Fahrzeugs von einer Stimme aus einem Multimediaabspielgerät, insbesondere dem Soundsystem des Fahrzeugs oder einem an das Fahrzeug angeschlossenen mitgeführten Multimediaabspielgerät, unterschieden wird.

Einen Schritt bei dem das Erfassen des Kommunikationsvorhabens zumindest eines Insassen des Fahrzeugs mittels des Erkennens seiner Lippenbewegung und/oder einer körperlichen Regung, insbesondere mittels einer Innenraumkamera erfolgt.

Einen Schritt bei dem das Audiosignal abhängig von der Position des Sprechers und/oder einer relativen Richtung, aus der der gesprochene Inhalt kommt oder entsprechend dem Kommunikationsvorhaben kommen wird, angepasst wird.

Einen Schritt bei dem eine Emotionserkennung und/oder Absichtserkennung eines Insassen des Fahrzeugs erkannt wird und im Verfahren berücksichtigt wird, wobei daraufhin die Veränderung des Audiosignals, bevorzugt in unterschiedlicher Weise, erfolgt.

Einen Schritt umfassend ein Ermitteln einer Anwendbarkeit, insbesondere einer Erfolgswahrscheinlichkeit, dass die Parameter oder Inhalte der gesprochenen Sprache und die Parameter des Audiosignals, insbesondere im Hinblick auf einen Hintergrundgeräusch nicht hinreichend abwandelbar sind, und daraufhin einen Schritt umfassend eine Auswahl einer Maßnahme oder einer Maßnahmenkombination in Bezug auf das Audiosignal des Fahrzeugs, insbesondere zum Verändern des Audiosignals des Fahrzeugs.

Einen Schritt umfassend ein Ermitteln insbesondere Prädizieren, eines Parameters einer auditiven Kommunikation im Innenraum eines Fahrzeugs, und einen Schritt umfassend ein Verändern zumindest eines Parameters des Audiosignals des Fahrzeugs abhängig von dem ermittelten, insbesondere prädizierten Parameter der auditiven Kommunikation.

In diesem Beispiel des Verfahrens wird die Stimme einer Person (eines Sprechers) im Innenraum des Fahrzeugs von einem, eine menschliche Stimme umfassenden, im Fahrzeug ausgegebenen Inhalt, z.B. aus des besagten Audiosystem des Fahrzeugs oder aus einer weiteren Audioausgabevorrichtung, insbesondere eines weiteren mobilen Anwendergeräts, unterschieden. Eine solche Unterscheidung kann im Verfahren abhängig von einem Abgleich eines Signals des Audiosystems mit dem Signal eines Mikrofons erfolgen.

Der besagte Parameter der auditiven Kommunikation kann eine, z.B. zeitlich geordnete, Sequenz aus mehreren Parameterwerten, z.B. in Bezug auf die nahe Vergangenheit, und/oder etwa den aktuellen Zeitpunkt, und/oder eine Prädiktion für die nahe Zukunft, umfassen. Beispielsweise kann ein Parameter der auditiven Kommunikation auch ein Maß der Veränderung der Werte eines bestimmten Parameterwerts im Verlauf der Zeit und/oder in Bezug auf ein auf den Raum (räumliche Dimension, Distanzeinheit, Positionswert, etc) bezogene Größe, z.B. Richtung oder Distanz repräsentieren.

Zumindest ein Parameter der auditiven Kommunikation kann im Verfahren auf Basis von Sensordaten, einer Historie, z.B. im Zusammenhang mit einer oder mehreren Kommunikationen im Fahrzeuginnenraum oder Kommunikationen mit Beteiligung bestimmter Personen und/oder unter Berücksichtigung einer Wahrscheinlichkeitsrechnung, ermittelt werden. Beispielsweise kann zumindest ein Parameter der auditiven Kommunikation, insbesondere anhand eines Abgleichs bzw. Verrechnung einer Vielzahl der Parameter aus der Historie prädiziert werden.

Auch kann eine Erkennung von Schlüsselworten oder bestimmter Kommunikationslaute (Ausrufewort, Interjektion, Zungenschnalzen, Aufschreien, Lachen, Schluchzen, Weinen, etc.) berücksichtigt werden. Insbesondere kann zumindest ein Parameter des im Innenraum auszugebenden Audiosignals abhängig von der erkannten Gestik und von einem erkannten Schlüsselwort, insbesondere vorausschauend angepasst werden. Bevorzugt kann im Verfahren ein Maß der Übereinstimmung zwischen der zumindest einer erkannten Gestik und zumindest einem Schlüsselwort oder eines Kommunikationslauts ermittelt und berücksichtigt werden.

Einen Schritt bei dem die Veränderung des Parameters des Audiosignals zumindest einen Raumklangparameter betrifft, wobei, bevorzugt zumindest eine Richtung, aus der das Audiosignal des Fahrzeugs kommt oder gehört wird, insbesondere vom Fahrer des Fahrzeugs gehört wird, angepasst wird.

Einen Schritt bei dem die Veränderung des Parameters des Audiosignals umfasst eine Abwandlung des Audiosignals im Frequenzbereich derart, dass Signalkomponenten des Audiosignals, die den Frequenzbereich der menschlichen Sprache, insbesondere innerhalb der Stimme des Sprechers betreffen, derart abgewandelt werden, dass die Signalenergie auf eine oder mehrere Frequenzbereiche verteilt wird, die den Frequenzbereich der menschlichen Stimme, insbesondere der Stimme des Sprechers, nicht oder in einem geringeren Maße betreffen.

Einen Schritt bei dem die Veränderung des Parameters des Audiosignals eine zumindest teilweise Verlagerung der Frequenzen des Audiosignals umfasst, die zumindest statistisch den Frequenzen des Sprachsignals des Sprechers entsprechen, von einer ersten Raumrichtung, in der sich der Sprecher befindet zu einer zweiten Raumrichtung, die abweichend als die erste Raumrichtung, insbesondere im Wesentlichen entgegengesetzt zu der ersten Richtung, angeordnet ist.

Einen Schritt umfassend ein Einlernen einer bestimmten Stimme und/oder einer bestimmten körperlichen Regung eines Sprechers zu einem oder mehreren Zeitintervallen, und daraufhin einen Schritt umfassend bei einer Wiedererkennung der bestimmten Stimme und/oder der bestimmten körperlichen Regung eines Sprechers zu einem oder mehreren späteren Zeitintervallen eine Anwendung einer optimierten oder vorgespeicherten Anpassung des Audiosignals für die Stimme des Sprechers. Eingelernte Stimmen können als ein oder mehrere, für die Stimme typische Parameterwerte repräsentiert werden. Auf Basis solcher Parameter können Erkennungsdaten für eine oder mehrere bestimmte Stimmen ermittelt bzw. im Verfahren verarbeitet werden. Beispielsweise können die Erkennungsdaten für eine oder mehrere Stimmen auch auf Basis der Daten einer Sprachsteuerung, Freisprechvorrichtung des Fahrzeugs, oder eines mobilen Anwendergeräts (z.B. beim Telefonieren) gewonnen werden.

Einen Schritt umfassend ein Einlernen einer bestimmten körperlichen Regung, die dem Sprechen, insbesondere bei einem bestimmten Insassen, einer sprachlichen Kommunikation vorausgeht zu einem oder mehreren Zeitintervallen, und daraufhin einen Schritt umfassend bei einer Wiedererkennung der körperlichen Regung, insbesondere auch beim Wiedererkennen des bestimmten Sprechers und/oder der für den Sprecher aus mehreren Zeitintervallen typischen körperlichen Regung eine Anwendung einer optimierten oder vorgespeicherten Anpassung des Audiosignals für die Stimme des Sprechers.

Insbesondere bezieht sich das Einlernen Stimmen und/oder körperliche Regungen auf bestimmte, für bestimmte Insassen, insbesondere Insassen zugehörig zu bestimmten Personengruppen, charakteristische Merkmale, z.B. entsprechende qualitative und/oder quantitative Werte oder Zusammenhänge zwischen solchen.

Bevorzugt bezieht sich ein Einlernen auf das Ermitteln eines (naturwissenschaftlichen, mathematischen) Zusammenhangs zwischen einem Parameter einer oder mehreren körperlichen Regungen, die abhängig von bestimmten Mustern der Gestik und/oder Mimik sind, und einer einhergehenden oder nachfolgenden auditiven Kommunikation, insbesondere dem Sprechen einer Person (Insassen). Dies kann im Verfahren in Bezug auf eine bestimmte Person oder in Bezug auf eine Person mit bestimmten, z.B. sensorisch erkennbaren Eigenschaften (Körpergröße, Kleidung, Bewegungsparameter, Personengruppe, etc.) oder in Bezug auf eine Person an einer bestimmten Raumposition und/oder an einem Sitzplatz des Fahrzeugs eingelernt werden.

Erfindungsgemäß kann das besagte Einlernen ferner umfassen: Erfassen eines Feedback-Indikators, der kennzeichnend ist für eine zumindest einmal, zweckmäßige, passende bzw. zufriedenstellende Anpassung des Audiosignals, und daraufhin eine Berücksichtigung des Feedback-Indikators bei einer wiederholten Ausführung des Verfahrens.

## Patentansprüche

1. Verfahren zur Steuerung eines Audiosystems eines Fahrzeugs mit folgenden Schritten
- Erfassen einer Stimme zumindest eines Insassen des Fahrzeugs, wobei die Stimme repräsentativ ist für eine sprachliche Botschaft an einen anderen Insassen des Fahrzeugs, wobei erkannt wird, ob es sich bei einer erfassten Stimme um eine Stimme einer bestimmten Person oder einer bestimmten Personengruppe handelt,
- Verändern zumindest eines Audiosignals des Fahrzeugs abhängig vom Erkennen der Stimme einer bestimmten Person oder einer bestimmten Personengruppe.

2. Verfahren nach einem der vorangegangenen Ansprüche, bei dem eine Stimme eines Sprechers im Innenraum des Fahrzeugs von einer Stimme aus einem Multimediaabspielgerät, insbesondere dem Soundsystem des Fahrzeugs oder einem an das Fahrzeug angeschlossenen, mitgeführten Multimediaabspielgerät, unterschieden wird.

3. Verfahren nach einem der vorangegangenen Ansprüche, bei dem das Audiosignal abhängig von der Position des Sprechers und/oder einer relativen Richtung, aus der der gesprochene Inhalt kommt oder entsprechend dem Kommunikationsvorhaben kommen wird, angepasst wird.

4. Verfahren nach einem der vorangegangenen Ansprüche, bei dem eine Emotionserkennung und/oder Absichtserkennung eines Insassen des Fahrzeugs erkannt wird und im Verfahren berücksichtigt wird, wobei daraufhin die Veränderung des Audiosignals, bevorzugt in unterschiedlicher Weise, erfolgt.

5. Verfahren nach einem der vorangegangenen Ansprüche, auch umfassend,
- Ermitteln einer Anwendbarkeit, insbesondere einer Erfolgswahrscheinlichkeit, dass die Parameter des Audiosignals bei bestimmten Parameter und/oder Inhalten der gesprochenen Sprache, insbesondere unter Berücksichtigung eines Hintergrundgeräuschs nicht hinreichend abwandelbar waren oder sind,
und daraufhin:
Auswahl einer Maßnahme oder einer Maßnahmenkombination in Bezug auf das Audiosignal des Fahrzeugs, insbesondere zum Verändern des Audiosignals des Fahrzeugs und/oder eine erneute Wiedergabe zumindest eines Abschnitts des Audiosignals.

6. Verfahren nach einem der vorangegangenen Ansprüche auch umfassend:
- Ermitteln insbesondere Prädizieren, eines Parameters einer auditiven Kommunikation im Innenraum eines Fahrzeugs, und
- Verändern zumindest eines Parameters des Audiosignals des Fahrzeugs abhängig von dem ermittelten, insbesondere prädizierten Parameter der auditiven Kommunikation.

7. Verfahren nach Anspruch 6, bei dem
die Veränderung des Parameters des Audiosignals zumindest einen Raumklangparameter betrifft, wobei, bevorzugt zumindest eine Richtung, aus der das Audiosignal des Fahrzeugs kommt oder gehört wird, insbesondere vom Fahrer des Fahrzeugs gehört wird, angepasst wird.

8. Verfahren nach Anspruch 6 oder 7, wobei die Veränderung des Parameters des Audiosignals umfasst:
eine Abwandlung des Audiosignals im Frequenzbereich derart, dass Signalkomponenten des Audiosignals, die den Frequenzbereich der menschlichen Sprache, insbesondere innerhalb der Stimme des Sprechers betreffen, derart abgewandelt werden, dass die Signalenergie auf eine oder mehrere Frequenzbereiche verteilt wird, die den Frequenzbereich der menschlichen Stimme, insbesondere der Stimme des Sprechers, nicht oder in einem geringeren Maße betreffen.

9. Verfahren nach einem der Ansprüche 6 bis 8, bei dem
die Veränderung des Parameters des Audiosignals eine zumindest teilweise Verlagerung der Frequenzen des Audiosignals umfasst, die zumindest statistisch den Frequenzen des Sprachsignals des Sprechers entsprechen, von einer ersten Raumrichtung, in der sich der Sprecher befindet zu einer zweiten Raumrichtung, die abweichend als die erste Raumrichtung, insbesondere im Wesentlichen entgegengesetzt zu der ersten Richtung, angeordnet ist.

10. Verfahren nach einem der Ansprüche 6 bis 9, auch umfassend:
- ein Einlernen einer bestimmten Stimme und/oder einer bestimmten körperlichen Regung eines Sprechers zu einem oder mehreren Zeitintervallen,
und daraufhin:
- bei einer Wiedererkennung der bestimmten Stimme und/oder der bestimmten körperlichen Regung eines Sprechers zu einem oder mehreren späteren Zeitintervallen:
- Anwendung einer optimierten oder vorgespeicherten Anpassung des Audiosignals für die Stimme des Sprechers.

11. Verfahren nach einem der Ansprüche 6 bis 10, auch umfassend:
- ein Einlernen einer bestimmten körperlichen Regung, die dem Sprechen, insbesondere bei einem bestimmten Insassen, einer sprachlichen Kommunikation vorausgeht zu einem oder mehreren Zeitintervallen,
und daraufhin:
- bei einer Wiedererkennung der körperlichen Regung, insbesondere auch beim Wiedererkennen des bestimmten Sprechers und/oder der für den Sprecher aus mehreren Zeitintervallen typischen körperlichen Regung:
- Anwendung einer optimierten oder vorgespeicherten Anpassung des Audiosignals für die Stimme des Sprechers.

12. Vorrichtung zur Steuerung eines Audiosystems eines Fahrzeugs, wobei die Vorrichtung dazu ausgebildet ist
- eine Stimme zumindest eines Insassen des Fahrzeugs zu erfassen, wobei die Stimme repräsentativ ist für eine sprachliche Botschaft an einen anderen Insassen des Fahrzeugs, wobei erkannt wird, ob es sich bei einer erfassten Stimme um eine Stimme einer bestimmten Person oder einer bestimmten Personengruppe handelt,
- zumindest ein Audiosignals des Fahrzeugs abhängig vom Erkennen der Stimme einer bestimmten Person oder einer bestimmten Personengruppe zu verändern.

13. Mobiles Anwendergerät zur Steuerung eines Audiosystems eines Fahrzeugs, das eine Schnittstelle mit dem Fahrzeug umfasst und eingerichtet ist
- eine Stimme zumindest eines Insassen des Fahrzeugs zu erfassen, wobei die Stimme repräsentativ ist für eine sprachliche Botschaft an einen anderen Insassen des Fahrzeugs, wobei erkannt wird, ob es sich bei einer erfassten Stimme um eine Stimme einer bestimmten Person oder einer bestimmten Personengruppe handelt,
- zumindest ein Audiosignals des Fahrzeugs abhängig vom Erkennen der Stimme einer bestimmten Person oder einer bestimmten Personengruppe zu verändern.

14. Computerprogramm, insbesondere ein Computerprogrammprodukt umfassend ein Computerprogramm, wobei das Computerprogramm ausgebildet ist, bei seiner Ausführung auf einer Recheneinheit
- eine Stimme zumindest eines Insassen des Fahrzeugs zu erfassen, wobei die Stimme repräsentativ ist für eine sprachliche Botschaft an einen anderen Insassen des Fahrzeugs, wobei erkannt wird, ob es sich bei einer erfassten Stimme um eine Stimme einer bestimmten Person oder einer bestimmten Personengruppe handelt,
- zumindest ein Audiosignals des Fahrzeugs abhängig vom Erkennen der Stimme einer bestimmten Person oder einer bestimmten Personengruppe zu verändern.

## Claims

1. Method for controlling an audio system of a vehicle, having the following steps:
- capturing a voice of at least one occupant of the vehicle, the voice being representative of a spoken message to another occupant of the vehicle, it being detected whether a captured voice is a voice of a specific person or of a specific group of people, and
- changing at least one audio signal of the vehicle on the basis of the detection of the voice of a specific person or of a specific group of people.

2. Method according to any one of the preceding claims, wherein
a voice of a speaker in the interior of the vehicle is distinguished from a voice from a multimedia player, in particular the sound system of the vehicle or a multimedia player connected to and carried along with the vehicle.

3. Method according to either one of the preceding claims, wherein
the audio signal is adjusted on the basis of the position of the speaker and/or a relative direction from which the spoken content comes, or will come according to the intention to communicate.

4. Method according to any one of the preceding claims, wherein
an emotion detection and/or an intent detection for an occupant of the vehicle is detected and is taken into account in the method, the changing of the audio signal then being carried out, preferably in different ways.

5. Method according to any one of the preceding claims, also comprising
- determining an applicability, in particular a probability of success, of the parameters of the audio signal not having been or being sufficiently modifiable for certain parameters and/or content of the spoken speech, in particular taking into account background noise,
and then:
selecting a measure or a combination of measures in relation to the audio signal of the vehicle, in particular to change the audio signal of the vehicle, and/or replaying at least one section of the audio signal.

6. Method according to any one of the preceding claims also comprising:
- determining, in particular predicting, a parameter of an auditory communication in the interior of a vehicle, and
- changing at least one parameter of the audio signal of the vehicle on the basis of the determined, in particular predicted, parameter of the auditory communication.

7. Method according to Claim 6, wherein
the changing of the parameter of the audio signal relates to at least one spatial sound parameter, with preferably at least one direction from which the audio signal of the vehicle comes or is heard, in particular is heard by the driver of the vehicle, being adjusted.

8. Method according to Claim 6 or 7, the changing of the parameter of the audio signal comprising:
modifying the audio signal in the frequency domain in such a way that signal components of the audio signal that relate to the frequency range of human speech, in particular within the voice of the speaker, are modified in such a way that the signal energy is distributed over one or more frequency ranges that do not relate or that relate to a lesser extent to the frequency range of the human voice, in particular the voice of the speaker.

9. Method according to any one of Claims 6 to 8, wherein
the changing of the parameter of the audio signal comprises at least partial displacement of the frequencies of the audio signal that correspond at least statistically to the frequencies of the voice signal of the speaker from a first spatial direction, in which the speaker is located, to a second spatial direction, which is arranged differently from the first spatial direction, in particular essentially opposite to the first direction.

10. Method according to any one of Claims 6 to 9, also comprising:
- learning a specific voice and/or a specific physical feeling of a speaker in one or more time intervals,
and then:
- if the specific voice and/or the specific physical feeling of a speaker is recognized in one or more later time intervals:
- applying an optimized or previously stored adjustment of the audio signal for the voice of the speaker.

11. Method according to any one of Claims 6 to 10, also comprising:
- learning a specific physical feeling that precedes the speaking of a spoken communication in one or more time intervals, in particular by a specific occupant,
and then:
- if the physical feeling is recognized, in particular also if the specific speaker and/or the physical feeling typical of the speaker from multiple time intervals is recognized:
- applying an optimized or previously stored adjustment of the audio signal for the voice of the speaker.

12. Device for controlling an audio system of a vehicle, the device being designed
- to capture a voice of at least one occupant of the vehicle, the voice being representative of a spoken message to another occupant of the vehicle, it being detected whether a captured voice is a voice of a specific person or of a specific group of people, and
- to change at least one audio signal of the vehicle on the basis of the detection of the voice of a specific person or of a specific group of people.

13. Mobile user apparatus for controlling an audio system of a vehicle that comprises an interface with the vehicle and is set up
- to capture a voice of at least one occupant of the vehicle, the voice being representative of a spoken message to another occupant of the vehicle, it being detected whether a captured voice is a voice of a specific person or of a specific group of people, and
- to change at least one audio signal of the vehicle on the basis of the detection of the voice of a specific person or of a specific group of people.

14. Computer program, in particular a computer program product comprising a computer program, the computer program being designed so as, when executed on a computing unit,
- to capture a voice of at least one occupant of the vehicle, the voice being representative of a spoken message to another occupant of the vehicle, it being detected whether a captured voice is a voice of a specific person or of a specific group of people, and
- to change at least one audio signal of the vehicle on the basis of the detection of the voice of a specific person or of a specific group of people.

## Revendications

1. Procédé permettant de commander un système audio d'un véhicule, comprenant les étapes suivantes consistant à
- détecter une voix au moins d'un passager du véhicule, la voix représentant un message vocal adressé à un autre passager du véhicule, dans lequel on reconnaît si une voix détectée est une voix d'une personne déterminée ou d'un groupe de personnes déterminé,
- modifier au moins un signal audio du véhicule en fonction de la reconnaissance de la voix d'une personne déterminée ou d'un groupe de personnes déterminé.

2. Procédé selon l'une quelconque des revendications précédentes, dans lequel une voix d'un locuteur dans l'habitacle du véhicule est distinguée par rapport à une voix provenant d'un appareil de lecture multimédia, en particulier d'un système de sonorisation du véhicule ou d'un appareil de lecture multimédia embarqué, connecté au véhicule.

3. Procédé selon l'une quelconque des revendications précédentes, dans lequel le signal audio est adapté en fonction de la position du locuteur et/ou d'une direction relative d'où provient le contenu prononcé ou selon l'intention de communication.

4. Procédé selon l'une quelconque des revendications précédentes, dans lequel une reconnaissance d'émotion et/ou une reconnaissance d'intention d'un passager du véhicule sont reconnues et prises en compte dans le procédé, dans lequel la modification du signal audio est alors effectuée de préférence de manière différente.

5. Procédé selon l'une quelconque des revendications précédentes, comprenant en outre
- établir une applicabilité, en particulier une probabilité de succès que les paramètres du signal audio ne fussent ou ne soient pas suffisamment modifiables pour des paramètres et/ou contenus déterminés de la parole prononcée, en particulier en tenant compte d'un bruit de fond, et par la suite :
sélectionner une mesure ou une combinaison de mesures concernant le signal audio du véhicule, en particulier pour modifier le signal audio du véhicule et/ou une nouvelle lecture d'au moins une partie du signal audio.

6. Procédé selon l'une quelconque des revendications précédentes, comprenant en outre :
- établir, en particulier prédire, un paramètre d'une communication auditive dans l'habitacle d'un véhicule, et
- modifier au moins un paramètre du signal audio du véhicule en fonction du paramètre établi, en particulier prédit, de la communication auditive.

7. Procédé selon la revendication 6, dans lequel la modification du paramètre du signal audio concerne au moins un paramètre de son spatial, dans lequel de préférence une direction d'où provient ou est perçu, en particulier par le conducteur du véhicule, le signal audio du véhicule est adaptée.

8. Procédé selon la revendication 6 ou 7, dans lequel la modification du paramètre du signal audio comprend :
une modification du signal audio dans le domaine fréquentiel de telle sorte que des composantes de signal du signal audio qui concernent le domaine fréquentiel de la parole humaine, en particulier à l'intérieur de la voix du locuteur, sont modifiées de telle sorte que l'énergie de signal est répartie sur un ou plusieurs domaines fréquentiels qui ne concernent pas ou dans une moindre mesure le domaine fréquentiel de la voix humaine, en particulier de la voix du locuteur.

9. Procédé selon l'une quelconque des revendications 6 à 8, dans lequel la modification du paramètre du signal audio comprend un décalage au moins partiel des fréquences du signal audio qui correspondent au moins statistiquement aux fréquences du signal vocal du locuteur d'une première direction spatiale dans laquelle se trouve le locuteur à une deuxième direction spatiale qui est disposée différemment par rapport à la première direction spatiale, en particulier de manière substantiellement opposée à la première direction.

10. Procédé selon l'une quelconque des revendications 6 à 9, comprenant en outre :
- un apprentissage d'une voix déterminée et/ou d'un mouvement corporel déterminé d'un locuteur à un ou plusieurs intervalles de temps, et par la suite :
- en cas d'identification de la voix déterminée et/ou du mouvement corporel déterminé d'un locuteur à un ou plusieurs intervalles de temps ultérieurs :
- l'application d'une adaptation optimisée ou préalablement stockée du signal audio pour la voix du locuteur.

11. Procédé selon l'une quelconque des revendications 6 à 10, comprenant en outre :
- un apprentissage d'un mouvement corporel déterminé qui précède la prise de parole, en particulier par un passager déterminé, pour une communication vocale à un ou plusieurs intervalles de temps, et par la suite :
- en cas d'identification du mouvement corporel, en particulier aussi en cas d'identification du locuteur déterminé et/ou du mouvement corporel typique du locuteur d'après plusieurs intervalles de temps :
- l'application d'une adaptation optimisée ou préalablement stockée du signal audio pour la voix du locuteur.

12. Dispositif permettant de commander un système audio d'un véhicule, le dispositif étant réalisé pour
- détecter une voix d'au moins un passager du véhicule, la voix représentant un message vocal adressé à un autre passager du véhicule, dans lequel on reconnaît si la voix détectée est une voix d'une personne déterminée ou d'un groupe de personnes déterminé,
- modifier au moins un signal audio du véhicule en fonction de la reconnaissance de la voix d'une personne déterminée ou d'un groupe de personnes déterminé.

13. Appareil utilisateur mobile permettant de commander un système audio d'un véhicule qui comprend une interface avec le véhicule et est conçu pour
- détecter une voix d'au moins un passager du véhicule, la voix représentant un message vocal adressé à un autre passager du véhicule, dans lequel on reconnaît si la voix détectée est une voix d'une personne déterminée ou d'un groupe de personnes déterminé,
- modifier au moins un signal audio du véhicule en fonction de la reconnaissance de la voix d'une personne déterminée ou d'un groupe de personnes déterminé.

14. Programme informatique, en particulier produit de programme informatique comprenant un programme informatique, dans lequel le programme informatique, lorsqu'il est exécuté sur une unité de calcul, est réalisé pour
- détecter une voix d'au moins un passager du véhicule, la voix représentant un message vocal adressé à un autre passager du véhicule, dans lequel on reconnaît si la voix détectée est une voix d'une personne déterminée ou d'un groupe de personnes déterminé,
- modifier au moins un signal audio du véhicule en fonction de la reconnaissance de la voix d'une personne déterminée ou d'un groupe de personnes déterminé.
